# EUROPEAN PATENT APPLICATION

(11) **EP 4 737 164 A1**
(43) Date of publication of application: **06.05.2026**
(21) Application number: 25207190.7
(22) Date of filing: 07.10.2025
(51) Int. Cl.: B60K 1/04, B60K 15/07, B60K 6/20

(54) **ARCHITECTURE FOR FUEL CELL MINING TRUCKS**

(30) Priority: 01.11.2024 US 202418934857
(71) Applicant: Cummins, Inc., Columbus, Indiana 47201 (US)
(72) Inventor: Richards, Kieran J., West Haddon, NN6 7ET (GB)
(74) Representative: Cleveland Scott York

(57) **Abstract**

Architectures of heavy equipment vehicles, such as mining trucks, are presented herein for hybridization of such vehicles. For example, the architectures provided herein may relate to the placement of fuel cell stacks, battery packs, fuel tanks, and/or other related components within an existing or new architecture of a heavy equipment vehicle.

## Description

### TECHNICAL FIELD OF THE PRESENT DISCLOSURE

The present disclosure relates to architectures, or component arrangement, of fuel cell mining trucks. In particular, the present disclosure relates to the arrangement of vehicle components for the retrofitting or first fitting of mining trucks for operation of the mining trucks using fuel cell powertrain systems.

### BACKGROUND OF THE PRESENT DISCLOSURE

Environmental and efficiency considerations has resulted in the electrification of vehicles across industries and purposes. While electric and hybrid passenger and cargo vehicles are becoming more commonplace, electrification and/or hybridization of large equipment vehicles poses its own set of challenges. For example, large equipment vehicles, such as mining trucks, cranes, bulldozers, etc. may require a workload and/or have a sheer size component that make implementation of alternative powertrains more difficult. Additionally, the components required for hybridization and/or electrification of such vehicles may be difficult to arrange due to the space available relative to the respective vehicle for mounting such components.

### SUMMARY OF THE PRESENT DISCLOSURE

Architectures of heavy equipment vehicles, such as mining trucks, are presented herein for hybridization of such vehicles. For example, the architectures provided herein may relate to the placement of fuel cell modules, battery pack modules, fuel tanks, and/or other related components within an existing or new architecture of a heavy equipment vehicle.

The invention is set out in the appended set of claims.

In a first aspect of the disclosure a mining haul truck is provided. The mining haul truck includes a vehicle chassis having a first end portion with a first end and a second end portion with a second end. The vehicle chassis includes a first longitudinal member extending from the first end to the second end and a second longitudinal member extending from the first end to the second end. The first longitudinal member and the second longitudinal member define a vehicle chassis space therebetween. A first wheel is coupled to the first longitudinal member at a first forward position. A second wheel is coupled to the first longitudinal member at a first rearward position. The first wheel and the second wheel define a side saddle therebetween. A third wheel is coupled to the second longitudinal member at a second rearward position. The third wheel and the fourth wheel define a second side saddle therebetween. A power module support frame is coupled to a forward position of the vehicle chassis. A first fluid tank is positioned within the vehicle chassis space defined by the first longitudinal member and the second longitudinal member and supported by the power module support frame.

In another aspect of the disclosure, a mining haul truck is provided. The mining haul truck includes a vehicle chassis having a first end portion with a first end and a second end portion with a second end. The vehicle chassis includes a first longitudinal member extending from the first end to the second end and a second longitudinal member extending from the firs tend to the second end. The first longitudinal member and the second longitudinal member define a vehicle chassis space therebetween. A power module support frame is coupled to a forward position of the vehicle chassis. A first fluid tank is positioned within the vehicle chassis space defined by the first longitudinal member and the second longitudinal member and mounted to a lower portion of the power module support frame. A fuel cell module is positioned within the vehicle chassis space and supported by an upper portion of the power module support frame. A balance-of-plant module is positioned within the vehicle chassis space and supported by the upper portion of the power module support frame.

In yet another aspect of the disclosure, a mining haul truck is provided. The mining haul truck includes a vehicle chassis having a first end portion with a first end and a second end portion with a second end. The vehicle chassis includes a first longitudinal member extending from the first end to the second end and a second longitudinal member extending from the first end to the second end. The first longitudinal member and the second longitudinal member define a vehicle chassis space therebetween. A power module support frame is positioned within the vehicle chassis space and coupled to the vehicle chassis. A first battery module is supported by the power module support frame. A first fuel cell module is positioned within the vehicle chassis space and supported by the power module support frame in a vertical arrangement with the first battery module so that the first fuel cell module is positioned above the first battery module. A first balance-of-plant module is positioned on the power module support frame and operably connected to the first fuel cell module.

In another aspect of the disclosure, a mining haul truck is provided. The mining haul truck includes a vehicle chassis having a first end portion with a first end and a second end portion with a second end. The vehicle chassis includes a first longitudinal member extending from the first end to the second end and a second longitudinal member extending from the first end to the second end. The first longitudinal member and the second longitudinal member define a vehicle chassis space therebetween. A power module support frame is positioned within the vehicle chassis space and coupled to the vehicle chassis. A fuel cell module is positioned within the vehicle chassis space and supported by the power module support frame. A balance-of-plant module is positioned within the vehicle chassis space, connected to the fuel cell module, and supported by the power module support frame. A radiator is positioned within the vehicle chassis space and supported by the power module support frame. The radiator is positioned in a vertical arrangement with the fuel cell module and the balance-of-plant module so that the radiator is positioned above the fuel cell module and the balance-of-plant module.

In yet another aspect of the disclosure, a mining haul truck is provided. The mining haul truck includes a vehicle chassis having a first end portion with a first end and a second end portion with a second end. The vehicle chassis has a first longitudinal member extending from the first end portion to the second end portion and a second longitudinal member extending from the first end portion to the second end portion. The first longitudinal member and the second longitudinal member define a vehicle chassis space therebetween. A first wheel is coupled to the first longitudinal member at a forward position. A second wheel is coupled to the first longitudinal member at a rearward position. The first wheel and the second wheel define a side saddle therebetween. A deck is supported by the first end portion of the vehicle chassis. A battery module is positioned within the first end portion of the vehicle chassis adjacent the first end of the vehicle chassis.

In another aspect of the disclosure, a mining haul truck is provided. The mining haul truck includes a vehicle chassis having a first end portion with a first end and a second end portion with a second end. The vehicle chassis including a first longitudinal member extending from the first end to the second end and a second longitudinal member extending from the first end to the second end. The first longitudinal member and the second longitudinal member define a vehicle chassis space therebetween. A power module support frame is positioned within the vehicle chassis space and coupled to the vehicle chassis. A first battery module is supported by the power module support frame. A second battery module is positioned at the first end portion of the vehicle chassis adjacent the first end of the vehicle chassis.

In yet another aspect of the disclosure, a mining haul truck is provided. The mining haul truck includes a vehicle chassis having a first end portion with a first end and a second end portion with a second end. The vehicle chassis includes a first longitudinal member extending from the first end portion to the second end portion and a second longitudinal member extending from the first end portion to the second end portion. The first longitudinal member and the second longitudinal member define a vehicle chassis space therebetween. A first wheel is coupled to the first longitudinal member at a first forward position. A second wheel is coupled to the first longitudinal member at a first rearward position. The first wheel and the second wheel define a first side saddle therebetween. A third wheel is coupled to the second longitudinal member at a second forward position. A fourth wheel is coupled to the second longitudinal member at a second rearward position. The third wheel and the fourth wheel define a second side saddle therebetween. The second wheel and the fourth wheel define a rear chassis space therebetween. A fluid tank is mounted at the first end portion of the vehicle chassis adjacent to the first end of the vehicle chassis.

In another aspect of the disclosure, a method of assembling a mining haul truck is provided. The mining haul truck has a vehicle chassis including a first longitudinal member extending from a first end of the vehicle chassis to a second end of the vehicle chassis. The method includes mounting a first battery module on a power module support frame within a vehicle chassis space defined between the first longitudinal member and the second longitudinal member. The method also includes positioning a first fuel cell module in a vertical arrangement with the first battery module so that the first fuel cell module is supported by the power module support frame above the first battery module.

In yet another aspect of the disclosure, a method of assembling a mining haul truck is provided. The mining haul truck has a vehicle chassis including a first longitudinal member extending from a first end of the vehicle chassis to a second end of the vehicle chassis and a second longitudinal member extending from a first end of the vehicle chassis to a second end of the vehicle chassis. The method includes mounting a fuel cell module to a power module support frame within a vehicle chassis space defined between the first longitudinal member and the second longitudinal member. The method also includes mounting a balance-of-plant module to the power module support frame and positioning a radiator in a vertical arrangement with the fuel cell module and the balance-of-plant module so that the radiator is supported by the power module support frame above the fuel cell module and the balance-of-plant module.

In another aspect of the disclosure, a method of assembling a mining haul truck. The mining haul tuck includes a vehicle chassis with a first end portion with a first end and a second end portion with a second end. The vehicle chassis includes a first longitudinal member extending from the first end portion to the second end portion and a second longitudinal member extending from the first end portion to the second end portion. A vehicle chassis space is defined between the first longitudinal member and the second longitudinal member. The mining haul truck also has a first wheel coupled to the first longitudinal member at a forward position and a second wheel coupled to the first longitudinal member at a rearward position. A side saddle is defined between the first wheel and the second wheel. A deck is supported by the first end portion of the vehicle chassis. The method includes mounting a battery module to the first end portion of the vehicle chassis adjacent to the first end of the vehicle chassis.

In yet another aspect of the disclosure, a method of assembling a mining haul truck is provided. The mining haul truck has a vehicle chassis including a first longitudinal member extending from a first end of the vehicle chassis to a second end of the vehicle chassis and a second longitudinal member extending from the first end of the vehicle chassis to the second end of the vehicle chassis. The first end of the vehicle chassis supports a deck. The method includes mounting a first battery module to a power module support frame. The power module support frame is coupled to the vehicle chassis within a vehicle chassis space defined between the first longitudinal member and the second longitudinal member. The method also includes mounting a second battery module at a first end portion of the vehicle chassis adjacent to the first end of the vehicle chassis.

In another aspect of the disclosure, a method of assembling a mining haul truck is provided. The method includes mounting a power module support frame to a forward portion of a vehicle chassis of the mining haul truck. The vehicle chassis includes a first longitudinal member extending from a first end of the vehicle chassis to a second end of the vehicle chassis and a second longitudinal member extending from the first end of the vehicle chassis to the second end of the vehicle chassis. The method also includes positioning a first fluid tank within a vehicle chassis space defined between the first longitudinal member and the second longitudinal member so that the first fluid tank is supported by the power module support frame. The mining haul truck further includes a deck supported by a first end portion of the vehicle chassis associated with the first end of the vehicle chassis; a first wheel coupled to the first longitudinal member at a first forward position; a second wheel coupled to the first longitudinal member at a first rearward position; a third wheel coupled to the second longitudinal member at a second forward position; and a fourth wheel coupled to the second longitudinal member at a second rearward position. The first wheel and the second wheel define a first side saddle therebetween. The third wheel and the fourth wheel define a second side saddle therebetween.

In yet another aspect of the disclosure, a method of assembling a mining haul truck is disclosed. The mining haul truck includes a vehicle chassis having a first end portion including the front end of the mining haul truck and a second end portion including a rear of the mining haul. The vehicle chassis includes a first longitudinal member extending from the first end portion to the second end portion and a second longitudinal member extending from the first end portion to the second end portion. The first longitudinal member and the second longitudinal member define a vehicle chassis space therebetween. A first wheel is coupled to the first longitudinal member at a first forward position. A second wheel is coupled to the first longitudinal member at a first rearward position. The first wheel and the second wheel define a first side saddle therebetween. A third wheel is coupled to the second longitudinal member at a second forward position. A fourth wheel is coupled to second longitudinal member at a second rearward position. The third wheel and the fourth wheel defined a second side saddle therebetween. The second wheel and the fourth wheel define a rear chassis space therebetween. The method includes mounting a fluid tank at the first end portion of the vehicle chassis adjacent to the first end of the vehicle chassis.

In another aspect of the disclosure, a mining haul truck is provided. The mining haul truck includes a vehicle chassis having a first end portion with a first end and a second end portion with a second end. The vehicle chassis includes a first longitudinal member extending from the first end to the second end and a second longitudinal member extending from the first end to the second end. The first longitudinal member and the second longitudinal member define a vehicle chassis space therebetween. A deck is supported by the first end portion of the vehicle chassis. An air inlet assembly is mounted to the deck. The air inlet assembling includes an air inlet scoop positioned above the deck and an air filter positioned in the air inlet scoop.

In yet another aspect of the disclosure, a method of assembling a mining haul truck is provided. The mining haul truck includes a vehicle chassis having a first end portion with a first end and a second end portion with a second end. The vehicle chassis includes a first longitudinal member extending from the first end to the second end and a second longitudinal member extending from the first end to the second end. The first longitudinal member and the second longitudinal member define a vehicle chassis space therebetween. The mining haul truck further includes a deck supported by the first end portion of the vehicle chassis. The method includes mounting an air inlet assembly to the deck. The air inlet assembly includes an air inlet scoop positioned above the deck. The method also includes positioning an air filter in the air inlet scoop.

In another aspect of the disclosure, a fuel cell module arrangement is provided. The fuel cell module arrangement includes a first battery module coupled to a top surface of a power module support frame; a first fuel cell module positioned above the first battery module; and a first balance-of-plant module coupled to a top surface of the power module support frame adjacent the first battery module. The first fuel cell module has a first connection end facing a first direction. The first balance-of-plant module is operably connected to the first connection end of the first fuel cell module.

In various aspects of the disclosure, the mining haul truck may include a hydraulic fluid tank positioned in the second side saddle and mounted to the vehicle chassis. The first battery module may be positioned between the power module support frame and the fluid tank.

In various aspects of the disclosure, the mining haul truck may include a fuel cell module positioned in one of the first side saddle and the second side saddle. The fuel cell module may be coupled to the vehicle chassis. The mining haul truck may include a battery module positioned in the other of the first side saddle and the second side saddle and coupled to the vehicle chassis.

In various aspects of the disclosure, the mining haul truck may include a battery module positioned within the vehicle chassis space and supported by the power module support frame.

In various aspects of the disclosure, the mining haul truck may include a battery module positioned within the first end portion of the vehicle chassis on or adjacent to the first end of the vehicle chassis.

In various aspects of the disclosure, the mining haul truck may include a battery module positioned in one of the first side saddle and the second side saddle and mounted to the vehicle chassis.

In various aspects of the disclosure, the mining haul truck may include a fuel cell module positioned in the second side saddle and coupled to the vehicle chassis.

In various aspects of the disclosure, the mining haul truck may include a fuel cell module positioned within the vehicle chassis space adjacent to the first fluid tank. The fuel cell module may be positioned between the power module support frame and the fluid tank. The fuel cell module may be in a vertical arrangement with the first fluid tank so that the fuel cell module is arranged above the first fluid tank.

In various aspects of the disclosure, the mining haul truck may include a fuel cell module positioned in the first side saddle and mounted to the vehicle chassis.

In various aspects of the disclosure, the mining haul truck may include a deck supported by the first end portion of the vehicle chassis; and a balance-of-plant module supported by the deck. The mining truck may include an air cleaner supported by the balance-of-plant module.

In various aspects of the disclosure, the mining haul truck may include a balance-of-plant module positioned within the vehicle chassis space and supported by at least one of the power module support frame and the first fluid tank. The balance-of plant module may be positioned between the power module support frame and the first fluid tank. The balance-of-plant module may be positioned in a rearward position relative to the fluid tank.

In various aspects of the disclosure, the mining haul truck may include an air cleaner positioned within the vehicle chassis space and supported by at least one of the power module support frame and the first fluid tank. The air cleaner may be supported by a balance-of-plant module. The balance-of-plant module may be supported by one of the power module support frame and the first fluid tank.

In various aspects of the disclosure, the first fluid tank may contain one of methanol and ammonia.

In various aspects of the disclosure, the first fluid tank may be a hydrogen tank.

In various aspects of the disclosure, the mining haul truck may include a second fluid tank positioned within one of the first side saddle, the second side saddle, and adjacent to the first fluid tank in the vehicle chassis space. The second fluid tank may be positioned adjacent to the first fluid thank within the vehicle chassis space. The first fluid tank and the second fluid tank may be in a vertical arrangement. The mining haul truck may include a third fluid tank positioned within another one of the first side saddle, the second side saddle, and adjacent to the first fluid tank in the vehicle chassis space. The first fluid tank may contain a first fluid and the second fluid tank may contain a second fluid different than the first fluid.

In various aspects of the disclosure, the mining haul truck may include a radiator positioned at the first end portion of the vehicle chassis adjacent the first end of the vehicle chassis. The radiator may be hingedly coupled to the mining haul truck. The mining haul truck may include a plurality of fans positioned between the radiator and the first fluid tank.

In various aspects of the disclosure, the mining haul truck may include a deck supported by a first end portion of the vehicle chassis; and an air cleaner supported by the deck adjacent to the first end of the chassis.

In various aspects of the disclosure, the mining haul truck may include a deck supported by a first end portion of the vehicle chassis and a resistor grid supported by the deck.

In various aspects of the disclosure, the mining haul truck may include a deck supported by a first end portion of the vehicle chassis and an inverter cabinet supported by the deck.

In various aspects of the disclosure, the first fluid tank may be cylindrical.

In various aspects of the disclosure, the mining haul truck may include a DC/DC system positioned in the vehicle chassis space in a vertical arrangement with the first fluid tank so that the DC/DC system is above the fluid tank.

In various aspects of the disclosure, the mining haul truck may include a rear chassis space defined between the second wheel and the fourth wheel and a heat exchanger positioned in the rear chassis space.

In various aspects of the disclosure, the mining haul truck may include a deck supported by a first end portion of the vehicle chassis. The deck may define an access panel to selectively provide access to the vehicle chassis space.

In various aspects of the disclosure, the mining haul truck may include a heat exchanger positioned within the first end portion of the vehicle chassis adjacent to the front end of the vehicle chassis.

In various aspects of the disclosure, the mining haul truck may include a first wheel coupled to the first longitudinal member at a first forward position and a second wheel coupled to the first longitudinal member at a first rearward position. The first wheel and the second wheel may define a side saddle therebetween. A battery module may be positioned within the first side saddle and mounted to the vehicle chassis. The mining haul truck may include a third wheel coupled to the second longitudinal member at a second forward position and a fourth wheel coupled to the second longitudinal member at a second rearward position. The third wheel and the fourth wheel may define a second side saddle therebetween. A hydraulics tank may be positioned within the second side saddle and mounted to the vehicle chassis. A second fluid tank may be positioned within the second side saddle and mounted to the vehicle chassis. At least one of the first fluid tank and the second fluid tank may be a hydrogen tank. At least one of the first fluid tank and the second fluid tank may contain one of methanol and ammonia.

In various aspects of the disclosure, the mining haul truck may include a deck supported by the first end portion of the vehicle chassis and an air cleaner supported by the deck.

In various aspects of the disclosure, the mining haul truck may include a first wheel coupled to the first longitudinal member at a forward position and a second wheel coupled to the first longitudinal member at a rearward position. The first wheel and the second wheel may define a side saddle therebetween. A fluid tank may be positioned within the first side saddle and coupled to the first longitudinal member. The fluid tank may contain one of methanol and ammonia. The fluid tank may be a hydrogen tank.

In various aspects of the disclosure, the mining haul truck may include a second battery module positioned within the vehicle chassis space and supported by the power module support frame. A second fuel cell module may be positioned within the vehicle chassis space and supported by the power module support frame in a vertical arrangement with the second battery module so that the second fuel cell module is positioned above the second battery module. A second balance-of-plant module may be positioned within the vehicle chassis space, supported by the power module support frame, and connected to the second fuel cell module. The first battery module may be coupled to a top surface of the power module support frame. The second battery module may be coupled to a bottom surface of the power module support frame.

In various aspects of the disclosure, the first balance-of-plant module may be integrated with the first fuel cell module.

In various aspects of the disclosure, the first balance-of-plant module may be spaced apart from the first fuel cell module. The first balance-of-plant module may be positioned at a forward position relative to the first fuel stack.

In various aspects of the disclosure, the mining haul truck may include a deck supported by the first end portion of the vehicle chassis; and a radiator positioned adjacent a forwardmost position of the deck. The mining haul truck may include a plurality of fans positioned adjacent to the radiator. The mining haul truck may include an air cleaner positioned between the radiator and the first balance-of-plant module.

In various aspects of the disclosure, the mining haul truck may include a battery module positioned at a first end portion of the vehicle chassis adjacent the first end of the vehicle chassis.

In various aspects of the disclosure, the mining haul truck may include an air cleaner positioned at a first end portion of the vehicle chassis adjacent the first end of the vehicle chassis.

In various aspects of the disclosure, the mining haul truck may include a plurality of fans positioned adjacent to the radiator.

In various aspects of the disclosure, the mining haul truck may include a fluid tank positioned within the side saddle and coupled to the vehicle chassis. The fluid tank may contain one of methanol and ammonia. The fluid tank may be a hydrogen tank.

In various aspects of the disclosure, the mining haul truck may include an air cleaner positioned within the first end portion of the vehicle chassis adjacent the first end of the vehicle chassis.

In various aspects of the disclosure, the mining haul truck may include a fuel cell module positioned within the vehicle chassis space. The mining haul truck may include a balance-of-plant module connected to the fuel cell module and positioned within the vehicle chassis space. The mining haul truck may include a radiator positioned in a vertical arrangement with the fuel cell module and the balance-of-plant module so that the radiator is above the fuel cell module and the balance-of-plant module. The radiator may be angled relative to the fuel cell module to define a triangular space between the fuel cell module and the radiator. The angle defined between the radiator and the fuel cell module may be 30°-45°. The mining haul truck may include a plurality of fans positioned adjacent to the radiator. The mining haul truck may include a second battery module positioned within the vehicle chassis space. The mining haul truck may include a hydrogen tank positioned in vertical arrangement with the second battery module so that the hydrogen tank is above the second battery module.

In various aspects of the disclosure, the mining haul truck may include a fluid tank positioned within the vehicle chassis space. The fluid tank may contain one of methanol and ammonia. The fluid tank may be a hydrogen tank.

In various aspects of the disclosure, the mining haul truck may include a balance-of-plant module supported by the deck. The mining haul truck may include a fluid tank positioned within the vehicle chassis space.

In various aspects of the disclosure, the mining haul truck may include a radiator positioned at the first end portion of the vehicle chassis adjacent to the first end of the vehicle chassis.

In various aspects of the disclosure, the mining haul truck may include a fuel cell module positioned within the side saddle and coupled to the vehicle chassis.

In various aspects of the disclosure, the mining haul truck may include a first wheel coupled to the first longitudinal member at a forward position and a second wheel coupled to the first longitudinal member at a rearward position. The first wheel and the second wheel may define a side saddle therebetween. A fuel cell module may be positioned in the side saddle and coupled to the vehicle chassis.

In various aspects of the disclosure, the mining haul truck may include a fluid tank positioned within the vehicle chassis space in a vertical arrangement with the first battery module so that the fluid tank is above the first battery module. The fluid tank may contain one of methanol and ammonia. The fluid tank may be a hydrogen tank.

In various aspects of the disclosure, the mining haul truck may include a deck supported by the first end portion of the vehicle chassis and a balance-of-plant module supported by the deck. The mining haul truck may include an air cleaner supported by the balance-of-plant module.

In various aspects of the disclosure, the mining haul truck may include a radiator positioned at the first end portion of the vehicle chassis adjacent the first end of the vehicle chassis.

In various aspects of the disclosure, the mining haul truck may include a battery module mounted in the vehicle chassis space.

In various aspects of the disclosure, the mining haul truck may include a fuel cell module positioned in one of the first side saddle and the second side saddle and coupled to the vehicle chassis. The mining haul truck may include a hydraulic tank positioned in the other of the first side saddle and the second side saddle and coupled to the vehicle chassis.

In various aspects of the disclosure, the mining haul truck may include a heat exchanger positioned in the rear chassis space and coupled to the vehicle chassis.

In various aspects of the disclosure, the mining haul truck may further include a first wheel coupled to the first longitudinal member at a forward position and a second wheel coupled to the first longitudinal member at a rearward position, and the method may include mounting a fluid tank to the first longitudinal member within the first side saddle. The fluid tank may contain one of methanol and ammonia. The fluid tank may be a hydrogen tank.

In various aspects of the disclosure, the method may include mounting a second battery module to the power module support frame within the vehicle chassis space. The method may include mounting a second fuel cell module in a vertical arrangement with the second battery module so that the second fuel cell module is supported by the power module support frame above the second battery module. The method may include positioning a balance-of-plant module within the vehicle chassis space so that the balance-of-plant module is supported by the power module support frame. The step of mounting the first battery module may include mounting the first battery module to a top surface of the power module support frame, and the step of mounting the second battery module may include mounting the second battery module to a bottom surface of the power module support frame.

In various aspects of the disclosure, the mining haul truck may include a balance-of-plant module integrated with the first fuel cell module.

In various aspects of the disclosure, the method may include positioning a balance-of-plant module in a position spaced-apart from the first fuel cell module. The step of positioning the balance-of-plant module may include positioning the balance-of-plant module in a forward position relative to the first fuel cell module.

In various aspects of the disclosure, the mining haul truck may include a deck supported by a first end portion of the vehicle chassis, and the method may include mounting a radiator to the mining truck adjacent to a forwardmost position of the deck. The first end portion of the vehicle chassis may be associated with the first end of the vehicle chassis. The method may include mounting a plurality of fans to the mining truck adjacent to the radiator. The method may include mounting an air cleaner to the mining haul truck between the radiator and a balance-of-plant module.

In various aspects of the disclosure, the method may include positioning a balance-of-plant module associated with the first fuel cell module in a vertical arrangement with the power module support frame so that the balance-of-plant module is supported by the power module support frame.

In various aspects of the disclosure, the mining truck may include a first wheel coupled to the first longitudinal member at a forward position and a second wheel coupled to the first longitudinal member at a rearward position, and the method may include mounting a fluid tank to the vehicle chassis within a side saddle defined between the first wheel and the second wheel. The fluid tank may contain one of methanol and ammonia. The fluid tank may be a hydrogen tank.

In various aspects of the disclosure, the method may include mounting a battery module to the mining truck at a first end portion of the chassis adjacent to the first end of the vehicle chassis.

In various aspects of the disclosure, the method may include positioning a plurality of fans so that the plurality of fans is supported by the power module support frame adjacent to the radiator.

In various aspects of the disclosure, the method may include mounting a fluid tank to the vehicle chassis within a side saddle defined between the first wheel and the second wheel. The fluid tank may contain one of methanol and ammonia. The fluid tank may be a hydrogen tank.

In various aspects of the disclosure, the method may include mounting an air cleaner to the first end portion.

In various aspects of the disclosure, the method may include mounting a fuel cell module to a power module support frame coupled to the vehicle chassis within the vehicle chassis space. The method may include mounting a balance-of-plant module to the power module support frame within the vehicle chassis space. The method may include positioning a radiator in a vertical arrangement with the fuel cell module and the balance-of-plant module so that the radiator is supported by the power module support frame above the fuel cell module and the balance-of-plant module. Positioning the radiator may include angling the radiator relative to the fuel cell module to define a triangular space between the fuel cell module and the radiator. An angle defined between the radiator and the fuel cell module may be 30°-45°. The method may include positioning a plurality of fans so that the plurality of fans is supported by the power module support frame adjacent to the radiator. The method may include mounting a second battery module to the power module support frame within the vehicle chassis space. The method may include positioning a hydrogen tank in a vertical arrangement with the second battery module so that the hydrogen tank is supported by the power module support frame above the second battery module.

The method may include mounting a battery module to the power module support frame in a vertical arrangement with the fuel cell module so that the fuel cell module is positioned above the battery module. The method may include mounting a fluid tank to the power module support frame in a vertical arrangement with the fuel cell module so that the fuel cell module is positioned above the battery module. The method may include positioning an outlet of the air inlet assembly adjacent to the fuel cell module.

In various aspects of the disclosure, the method may include mounting a fluid tank to the power module support frame within the vehicle chassis space. The fluid tank may contain one of methanol and ammonia. The fluid tank may be a hydrogen tank.

In various aspects of the disclosure, the method may include mounting a balance-of-plant module to the deck. The method may include positioning an air cleaner so that the air cleaner is supported by the balance-of-plant module.

In various aspects of the disclosure, the method may include mounting a radiator to the front end portion of the vehicle chassis adjacent the first end of the vehicle chassis.

In various aspects of the disclosure, the method may include mounting a fuel cell module to the vehicle chassis within the side saddle.

In various aspects of the disclosure, the mining haul truck may include a first wheel coupled to the first longitudinal member at a forward position and a second wheel coupled to the first longitudinal member at a rearward position, and the method may include mounting a fuel cell module to the vehicle chassis within a side saddle defined between the first wheel and the second wheel.

In various aspects of the disclosure, the method may include positioning a fluid tank in vertical arrangement with the first battery module so that the fluid tank is supported by the power module support frame above the first battery module. The fluid tank may contain one of methanol and ammonia. The fluid tank may be a hydrogen tank.

In various aspects of the disclosure, the method may include mounting a balance-of-plant module on the deck. The method may include positioning an air cleaner so that the air cleaner is supported by the balance-of-plant module.

In various aspects of the disclosure, the method may include mounting a radiator at a first end portion of the vehicle chassis adjacent the first end of the vehicle chassis.

In various aspects of the disclosure, the method may include positioning a first battery module within the vehicle chassis space so that the first battery module is supported by the power module support frame. Positioning the first battery module may include positioning the first battery module between the power module support frame and the fluid tank. The method may include mounting a second battery module adjacent to the first end of the vehicle chassis.

In various aspects of the disclosure, the fluid tank may contain one of methanol and ammonia.

In various aspects of the disclosure, the fluid tank may be a hydrogen tank.

In various aspects of the disclosure, the method may include positioning a balance-of-plant module within the vehicle chassis space so that the balance-of-plant module is supported by the power module support frame. Positioning the balance-of-plant module may include positioning the balance-of-plant module between the power module support frame and the fluid tank. Positioning the balance-of-plant module may include positioning the balance-of-plant module so that the balance-of-plant module is further supported by the fluid tank. Positioning the balance-of-plant module may include positioning the balance-of-plant module so that the balance-of-plant module is rearward relative to the fluid tank. The method may include positioning an air cleaner so that the air cleaner is supported by the balance-of-plant module.

In various aspects of the disclosure, the method may include mounting a fuel cell module to the vehicle chassis within at least one of the first side saddle and the second side saddle.

In various aspects of the disclosure, the method may include mounting a battery module to the vehicle chassis within at least one of the first side saddle and the second side saddle.

In various aspects of the disclosure, the method may include mounting a fuel cell module to the vehicle chassis within one of the first side saddle and the second side saddle and mounting a battery module to the vehicle chassis in the other of the first side saddle and the second side saddle.

In various aspects of the disclosure, the method may include mounting a second fluid tank within one of the first side saddle, the second side saddle, and the vehicle chassis space in a position adjacent to the first fluid tank. The method may include mounting the second fluid tank within the vehicle chassis space in a position adjacent to the first fluid tank so that the first fluid tank and the second fluid tank are in a vertical arrangement. The method may include mounting a third fluid tank within another of the first side saddle, the second side saddle, and the vehicle chassis space adjacent to the first fluid tank. The first fluid tank may contain a first fluid and the second fluid tank may contain a second fluid different than the first fluid.

In various aspects of the disclosure, the method may include mounting a radiator adjacent the first end of the vehicle chassis. Mounting the radiator may include hingedly mounting the radiator. The method may include positioning a plurality of fans between the radiator and the first fluid tank.

In various aspects of the disclosure, the method may include mounting a fuel cell module within the vehicle chassis space adjacent to the first fluid tank so that the fuel cell stack is supported by the power module support frame. Mounting the fuel cell module may include positioning the fuel cell module so that the fuel cell module is also supported by the fluid tank. Mounting the fuel cell module may include positioning the fuel cell module so that the fuel cell module is also supported by the fluid tank. Mounting the fuel cell module includes positioning the fuel cell module between the power module support frame and the fluid tank.

In various aspects of the disclosure, the method may include mounting an air cleaner on the deck adjacent to the first end of the chassis.

In various aspects of the disclosure, the method may include mounting a resistor grid on the deck.

In various aspects of the disclosure, the method may include mounting an inverter cabinet on the deck.

In various aspects of the disclosure, the fluid tank may be cylindrical.

In various aspects of the disclosure, the method may include mounting a DC/DC system within the vehicle chassis space in a vertical arrangement with the fluid tank so that the DC/DC system is positioned above the fluid tank and supported by the power module support frame.

In various aspects of the disclosure, the method may include mounting a heat exchanger within a rear chassis space defined between the second wheel and the fourth wheel.

In various aspects of the disclosure, the method may include mounting a battery module to a power module support frame in the vehicle chassis space.

In various aspects of the disclosure, the method may include mounting a fuel cell module to the vehicle chassis in one of the first side saddle and the second side saddle. The method may include mounting a hydraulic tank to the vehicle chassis in the other of the first side saddle and the second side saddle.

In various aspects of the disclosure, the method may include mounting a heat exchanger to the vehicle chassis in the rear chassis space.

In various aspects of the disclosure, the mining haul truck may include a fuel cell module mounted to a power module support frame within the vehicle chassis space and coupled to the vehicle chassis. A battery module may be mounted to the power module support frame in a vertical arrangement with the fuel cell stack so that the fuel cell stack is positioned above the battery module. A fluid tank may be mounted to the power module support frame in a vertical arrangement with the fuel cell module so that the fuel cell module is positioned above the battery module. The air inlet assembly may include an outlet positioned adjacent to the fuel cell module.

In various aspects of the disclosure, the mining haul truck may include an air pump positioned within a body of the air inlet assembly.

In various aspects of the disclosure, the mining haul truck may include a balance-of-plant module positioned within a body of the air inlet assembly.

In various aspects of the disclosure, the mining haul truck may include a second filter positioned within a body of the air inlet assembly.

In various aspects of the disclosure, the mining haul truck may include an exhaust positioned between a portion of the air inlet assembly and a bottom surface of the deck.

In various aspects of the disclosure, the mining haul truck may include a first wheel mounted to a forward position of the first longitudinal member of the vehicle chassis; a second wheel mounted to a rearward position of the first longitudinal member of the vehicle chassis; a side saddle defined between the first wheel and the second wheel; and a battery module mounted to the vehicle chassis within the side saddle.

In various aspects of the disclosure, the mining truck may include a first wheel mounted to a forward position of the first longitudinal member of the vehicle chassis; a second wheel mounted to a rearward position of the first longitudinal member of the vehicle chassis; a side saddle defined between the first wheel and the second wheel; and a fluid tank mounted to the vehicle chassis within the side saddle. The fluid tank may contain one of methanol and ammonia. The fluid tank may be a hydrogen tank.

In various aspects of the disclosure, the mining haul truck may include a radiator mounted at a first end portion of the vehicle chassis adjacent the first end of the vehicle chassis. The radiator may be hingedly mounted.

In various aspects of the disclosure, the mining haul truck may include a DC/DC system mounted to a power module support frame within the vehicle chassis space and coupled to the vehicle chassis. The mining haul truck may include a first wheel mounted to a forward position of the first longitudinal member of the vehicle chassis; a second wheel mounted to a rearward position of the first longitudinal member of the vehicle chassis; a side saddle defined between the first wheel and the second wheel; and a fuel cell module mounted to the vehicle chassis within the side saddle.

In various aspects of the disclosure, the deck may define an access panel.

In various aspects of the disclosure, the method may include positioning an air pump within a body of the air inlet assembly.

In various aspects of the disclosure, the method may include positioning a balance-of-plant module within a body of the air inlet assembly.

In various aspects of the disclosure, the method may include positioning a second filter within a body of the air inlet assembly.

In various aspects of the disclosure, the method may include positioning an exhaust between a portion of the air inlet assembly and a bottom surface of the deck.

In various aspects of the disclosure, the mining haul truck may include a first wheel mounted to a forward position of the first longitudinal member of the vehicle chassis, a second wheel mounted to a rearward position of the first longitudinal member of the vehicle chassis, and a side saddle defined between the first wheel and the second wheel. The method may include mounting a battery module to the vehicle chassis within the side saddle.

In various aspects of the disclosure, the mining truck may include a first wheel mounted to a forward position of the first longitudinal member of the vehicle chassis, a second wheel mounted to a rearward position of the first longitudinal member of the vehicle chassis, and a side saddle defined between the first wheel and the second wheel. The method may include mounting a fluid tank to the vehicle chassis within the side saddle. The fluid tank may contain one of methanol and ammonia. The fluid tank may be a hydrogen tank.

In various aspects of the disclosure, the method may include mounting a radiator at the first end portion of the vehicle chassis adjacent the first end of the vehicle chassis. Mounting the radiator may include hingedly mounting the radiator.

In various aspects of the disclosure, the method may include mounting a DC/DC system to a power module support frame coupled to the vehicle chassis within the vehicle chassis space. The mining haul truck may include a first wheel mounted to a forward position of the first longitudinal member of the vehicle chassis, a second wheel mounted to a rearward position of the first longitudinal member of the vehicle chassis, and a side saddle defined between the first wheel and the second wheel. The method may include mounting a fuel cell module to the vehicle chassis within the side saddle.

In various aspects of the disclosure, the fuel cell module arrangement may include a second battery module coupled to a bottom surface of the power module support frame.

In various aspects of the disclosure, the fuel cell module arrangement may include a second fuel cell module positioned above the first battery module and having a second connection end facing a second direction. The first direction and the second direction may be opposite of each other. The fuel cell module arrangement may include a second balance-of-plant module coupled to a top surface of the power module support frame. The second balance-of-plant module may be operably connected to the second connection end of the second fuel cell module. The first balance-of-plant module may be coupled to the top surface of the power module support frame corresponding with a first longitudinal half of the power module support frame. The second balance-of-plant module may be coupled to the top surface of the power module support frame corresponding with a second longitudinal half of the power module support frame.

The first fuel cell module may be a plurality of fuel cell modules. The plurality of fuel cell modules may include a stacked pair of fuel cell modules. The plurality of fuel cell modules may include two stacked pairs of fuel cell modules. The first balance-of-plant module may be a plurality of balance-of-plant modules. The plurality of balance-of-plant modules may include a stacked pair of balance-of-plant modules. The plurality of balance-of-plant modules may include two stacked pairs of fuel cell modules. The first connection end of each fuel cell module of the plurality of fuel cell modules may face a first direction. Each balance-of-plant module of the plurality of balance-of-plant modules may be arranged on a first longitudinal half of the power module support frame corresponding with the first direction. The fuel cell module arrangement may include a second plurality of fuel cell modules positioned above the first battery pack module. Each fuel cell of the second plurality of fuel cell modules may have a second connection end facing a second direction. A second plurality of balance-of-plant modules may be coupled on a second longitudinal half of the power module support frame corresponding with the second direction.

Additional features and advantages of the present disclosure will become apparent to those skilled in the art upon consideration of the following detailed description of the illustrative embodiments exemplifying the disclosure as presently perceived.

### BRIEF DESCRIPTION OF THE DRAWINGS

The detailed description of the drawings particularly refers to the accompanying figures in which:
FIG. 1 is a schematic top-down illustration of an exemplary architecture arrangement of components of a mining truck;
FIG. 2 is a perspective illustration of an exemplary chassis and components mounted thereon;
FIG. 3 is a perspective illustration of an exemplary fuel cell arrangement including fuel cell module(s) with corresponding integrated balance-of-plant modules;
FIG. **4A** is a first side illustration of an exemplary fuel cell arrangement including fuel cell module(s) with corresponding remote balance-of-plant modules;
FIG. **4B** is a second side illustration of the fuel cell arrangement of FIG. 4A;
FIG. **4C** is a first end illustration of the fuel cell arrangement of FIG. 4A;
FIG. **4D** is a perspective illustration of the fuel cell arrangement of FIG. 4A;
FIG. 5 is a perspective illustration of an exemplary chassis wherein the fuel cell arrangement of FIG. 4A is mounted thereon;
FIG. 6 is a schematic illustration of an exemplary architecture of a first end of a mining truck;
FIG. 7A is a schematic top-down illustration of another exemplary architecture arrangement of components of a mining truck;
FIG. **7B** is a schematic first side illustration of the architecture arrangement of FIG. 7A;
FIG. **7C** is a schematic second side illustration of the architecture arrangement of FIG. 7A;
FIG. 8 is a schematic side illustration of an exemplary architecture arrangement of components of a mining truck;
FIG. 9 is a schematic side illustration of another exemplary architecture arrangement of components of a mining truck;
FIG. **10** is a schematic side illustration of an exemplary architecture arrangement of components of a mining truck;
FIG. **11** is a schematic side illustration of another exemplary architecture arrangement of components of a mining truck;
FIG. **12** is a schematic side illustration of an exemplary architecture arrangement of components of a mining truck;
FIG. **13** is a schematic side illustration of another exemplary architecture arrangement of components of a mining truck;
FIG. **14** is a schematic side illustration of an exemplary architecture arrangement of components of a mining truck;
FIG. **15** is a schematic side illustration of another exemplary architecture arrangement of components of a mining truck;
FIG. **16** is a schematic side illustration of an exemplary architecture arrangement of components of a mining truck;
FIG. **17A** is a schematic perspective illustration of another exemplary architecture arrangement of components of a mining truck;
FIG. **17B** is a schematic side illustration of the exemplary architecture arrangement of FIG. 17A;
FIG. **18** is a schematic side illustration of an exemplary architecture arrangement of components of a mining truck;
FIG. **19A** is a schematic side illustration of another exemplary architecture arrangement of components of a mining truck with a first position of an air filter;
FIG. **19B** is a schematic side illustration of the exemplary architecture arrangement of FIG. **19A**, with an alternate position of the air filter;
FIG. **20A** is a schematic side illustration of an exemplary architecture arrangement of components of a mining truck;
FIG. **20B** is a schematic side illustration of the exemplary architecture arrangement of FIG. **20A**, further including a heat exchanger positioned within a rear region of a chassis of the mining truck;
FIG. **20C** is a schematic side illustration of the exemplary architecture arrangement of FIG. **20B**, with an alternate position of one or more balance-of-plant modules;
FIG. **21** is a schematic illustration of an arrangement of a deck of a mining truck including an access panel; and
FIG. **22** is a schematic illustration of a hinged radiator mounted to an end of a mining truck.

Although the drawings represent embodiments of various features and components according to the present disclosure, the exemplification set out herein illustrates an embodiment, and such an exemplification is not to be construed as limiting the scope of the disclosure in any manner.

### DETAILED DESCRIPTION OF THE DRAWINGS

For the purposes of promoting an understanding of the principles of the present disclosure, reference will now be made to the embodiments illustrated in the drawings, which are described herein. The embodiments disclosed herein are not intended to be exhaustive or to limit the invention to the precise form disclosed. Rather, the embodiments are chosen and described so that others skilled in the art may utilize their teachings. Therefore, no limitation of the scope of the claimed invention is thereby intended. The present invention includes any alterations and further modifications of the illustrated devices and described methods and further applications of principles in the invention which would normally occur to one skilled in the art to which the invention relates.

The terms "couples", "coupled", "coupler" and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

**In** some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

While the disclosure herein is provided in terms of a "mining truck", it is understood that the features described herein may apply to other vehicles, including heavy equipment such as cranes, bulldozers, excavators, etc., locomotives, and other appropriate vehicles.

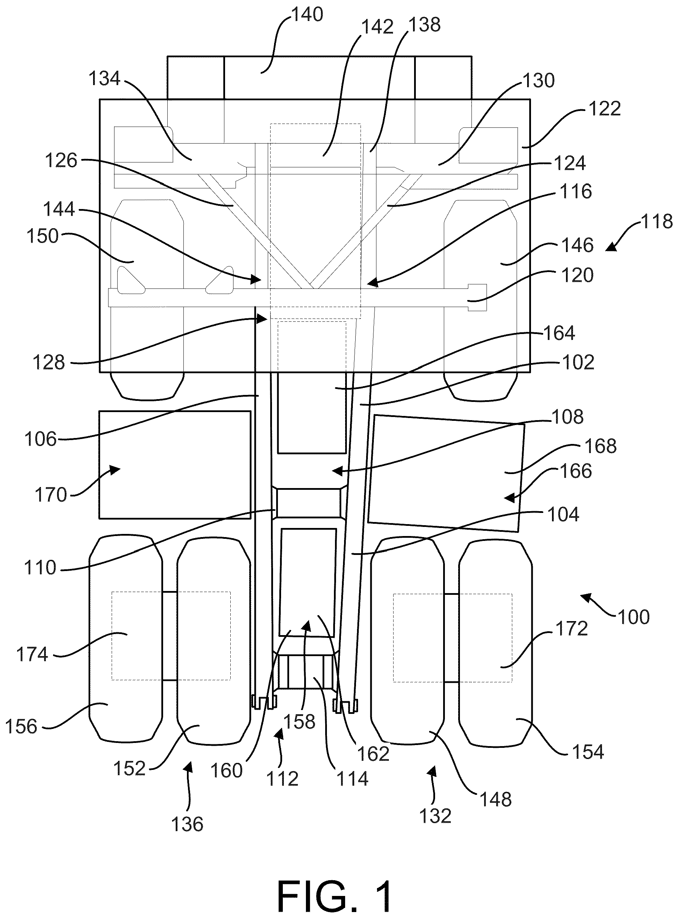

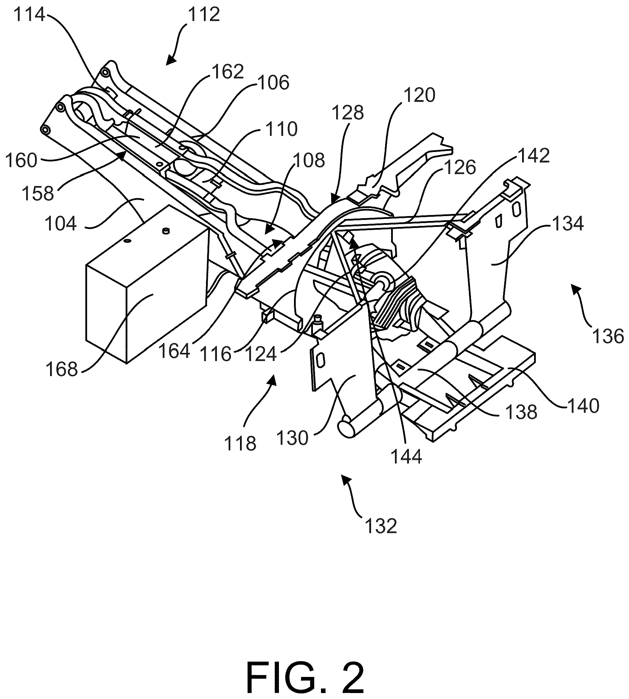

A schematic architecture of an exemplary mining truck **100** is illustrated in FIG. 1. As shown, mining truck **100** is generally built on and/or around chassis **102**. Referring additionally to FIG. **2**, chassis **102** includes a first frame member **104** and a second frame member **106** extending longitudinally from a first end portion of the chassis including a first end of the chassis to a second end portion of the chassis including a second end of the chassis to at least partially define a length of mining truck **100**. First frame member **104** and second frame member **106** may be spaced apart to form a space **108** therebetween, with a central crossbeam **110** extending from first frame member **104** to second frame member **106** across space **108,** generally defining a rear chassis region **112**. A rear crossbeam **114** may extend from first frame member **104** to second frame member **106** across space **108** at the rear of chassis **102**, and a horse collar **116** may connect first frame member **104** and second frame member **106** within a forward region **118** of chassis **102**.

A third frame member **120** may extend across the top of horse collar **116** and beyond the diameter of horse collar **116** to form a support for a deck **122** (FIG. **1**) as described further herein. A first supplemental frame member **124** and a second supplemental frame member **126** may each extend diagonally from a central portion **128** of third frame member **120** above horse collar **116** in opposite directions so that first supplemental frame member **124** may connect to a first support plate **130** and second supplemental frame member **126** connects to a second support plate **134**. First support plate **130** may also connet to first frame member **104** on a first side **132** of chassis **102,** and second support plate **134** may also connect to second frame member **106** on a second side **136** of chassis **102**.

A forward crossbeam **138** may extend from first frame member **104** to second frame member **106** in general alignment with first support plate **130** and second support plate **134**. A support extension **140** may extend forward of forward crossbeam **138**. An engine **142** may be positioned within an opening **144** defined by horse collar **116**. A traction alternator and/or gearbox may be mounted rearward of engine **142** within area **164**.

Referring again to FIG. **1****,** wheels **146**, **148**, **150**, and **152** may be mounted to chassis **102** via respective axles (not shown). For example, as shown, first wheel **146** may be mounted at a forward position in forward region **118** on first side **132** of chassis **102**. Second wheel **148** may be mounted at a rearward position in rear region **112** on first side **132** of chassis **102**. Third wheel **150** may be mounted at a forward position in forward region **118** on second side **136** of chassis **102**. Fourth wheel **152** may be mounted at a rearward position in rear region **112** on second side **136** of chassis **102**. In some embodiments, mining truck **100** may include a fifth wheel **154** mounted adjacent to second wheel **148** at a rearward position in rear region **112** on first side **132** of chassis **102**. Some embodiments may additionally include a sixth wheel **156** mounted adjacent to fourth wheel **152** at a rearward position in rear region **112** on second side **136** of chassis **102**. First wheel **146** and third wheel **150** may be mounted at a position generally corresponding to third frame member **102**.

A rear region space **158** defined between first frame member **104** and second frame member **106** within rear chassis region **112**, and at least partially defined between second wheel **148** and fourth wheel **152**, may be sized and shaped to receive a vehicle subsystem **160**. For example, as shown in FIG. **2**, vehicle subsystem **160** may include an aftertreatment system **162**. In other embodiments, vehicle subsystem **160** may include one or more battery module(s), a fuel tank, an exhaust muffler, an exhaust silencer, a powertrain support subsystem, or any other vehicle subsystems necessary or otherwise desired for operation of mining truck **100**. As described herein, an exhaust muffler and an exhaust silencer may be similar or the same components intended to quiet an exhaust by some volume. In other embodiments, rear region space **158** may be free of any vehicle subsystems or components.

First wheel **146** and second wheel **148** define a space, or first side saddle **166** therebetween. In some embodiments, as illustrated in FIGS. **1-2**, a fuel tank **168** may be mounted to chassis **102** within first side saddle **166**. Fuel tank **168** may contain, for example, diesel fuel or an alternative fuel, e.g., ammonia, methanol, ethanol, or other fuels suitable for operation of mining truck **100**. In some embodiments, alternative components may be mounted within first side saddle **166** as discussed further herein. Likewise, third wheel **150** and fourth wheel **152** may define a space, or second side saddle **170**. A first wheel motor **172** may be associated with second wheel **148** and, in embodiments including a fifth wheel, fifth wheel **154**. A second wheel motor **174** may be associated with fourth wheel **152** and, in embodiments including a sixth wheel, sixth wheel **156**. In some embodiments including a fifth and/or sixth wheel, each of second wheel **148**, fourth wheel **152**, fifth wheel **154,** and sixth wheel **156** may have a separate wheel motor. In other embodiments, all of wheels **146**, **148**, **150**, **152**, **154**, and **156** or wheels **146**, **148**, **150**, **152**, or any combination thereof, may be associated with a wheel motor, whether such wheel motor is designated to a single wheel or such wheel motor is shared between two or more wheels.

Still referring to FIG. **1**, deck **122** may be supported by chassis **102,** and, for example, by third frame member **120**, first support plate **130**, and second support plate **134**. In other words, deck **122** may be supported by the first end portion of chassis **102**, wherein the first end portion of chassis **102** includes a first end of the chassis **102**. Deck **122** may be configured to support a cab to facilitate operation of mining truck **100** and various vehicle subsystems, including hybrid powertrain subsystems and components as discussed further herein.

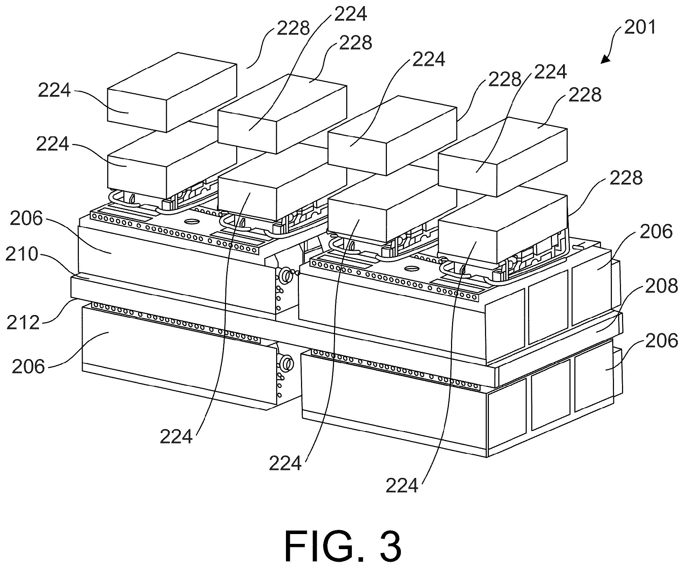

Now referring to FIG. **3**, an exemplary fuel cell arrangement **201** is illustrated. Fuel cell arrangement **201** includes a plurality of fuel cell modules **224** arranged in pairs, each fuel cell module **224** including an integrated balance-of-plant module **228**. Balance-of-plant module **228** may include any, including all or a portion of components required for operation of the corresponding fuel cell module **224**. For example, balance-of-plant module **228** may include components related to air management, fuel management, fuel cell stack management, and integration or connection of the components listed above and/or other components to corresponding fuel cell module(s) **224**. Such components may include, but are not limited to, pumps, sensors, compressors, humidifiers, heat exchangers, valves, sealing material, conduits, gaskets, and/or other components to facilitate operation of corresponding fuel cell module(s) **224**.

Fuel cell module(s) as referred to herein may include any type of fuel cell packaging including one or more fuel cell stack(s) for operation of a vehicle. For example, fuel cell module(s) may include fuel cell packaging including polymer electrolyte membrane fuel cells (i.e., proton exchange membrane fuel cells), direct methanol fuel cells, alkaline fuel cells (including alkaline membrane fuel cells), phosphoric acid fuel cells, molten carbonate fuel cells, solid oxide fuel cells, and reversible fuel cells.

As shown in FIG. **3**, each fuel cell module **224** may have its own balance-of-plant module **228** which is integrated directly with its corresponding fuel cell module **224.** Fuel cell module(s) **224** may be arranged in stacked pairs and positioned on one or more battery module(s) **206** and/or a power module support frame **208** to facilitate packaging of fuel cell arrangement **201** for fitting of fuel cell arrangement **201** within architecture of mining truck **100.** For example, fuel cell module(s) **224** may be positioned on a first layer of battery module(s) **206** and first layer of battery module(s) **206** may be mounted on a top surface **210** of power module support frame **208.** In some embodiments, as illustrated, a second layer of battery module(s) **206** may be mounted underneath power module support frame **208**, e.g., to a bottom surface **212** of power module support frame **208.** In some embodiments, fuel cell arrangement **201** may only have one layer of battery module(s) **206** mounted either above or below power support module **208**. In other embodiments, fuel cell arrangement **201** may not have any battery module **206** layers. In yet other embodiments, fuel cell arrangement **201** may include a greater layer of battery module(s) **206** mounted above and/or below power module support frame **208.** Battery module(s) **206** as described here and further herein may include, for example, a battery pack or another gathering of battery module(s) as known in the art.

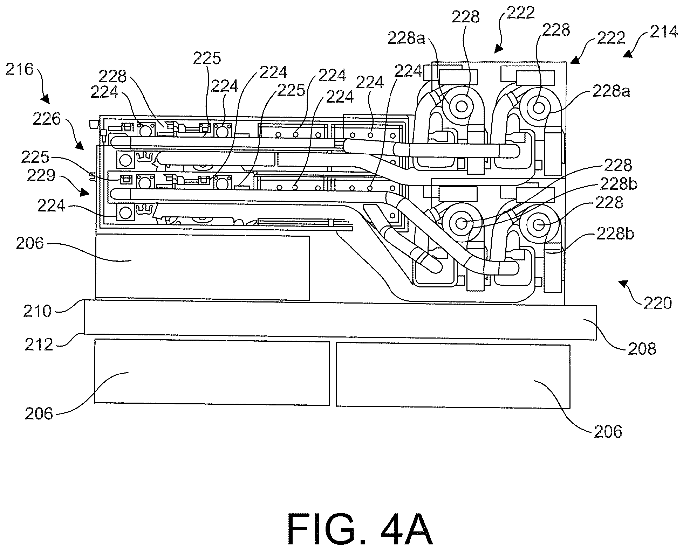

Now referring to FIGS. **4A-4D**, a second exemplary fuel cell arrangement **214** is illustrated. Fuel cell arrangement **214** includes a plurality of fuel cell modules **224** and one or more balance-of-plant module **228** as described above in relation to fuel cell arrangement **201.** However, in fuel cell arrangement **214**, balance-of-plant module **228** may be positioned remote from its corresponding fuel cell module(s) **224**. In other words, balance-of-plant module **228** may not be integrated with a corresponding fuel cell but is instead arranged separately from its corresponding fuel cell module(s) **224**. In some embodiments, each fuel cell module **224** may have its own designated balance-of-plant module **228**. In other embodiments, one balance-of-plant module **228** may service multiple fuel cell modules **224**.

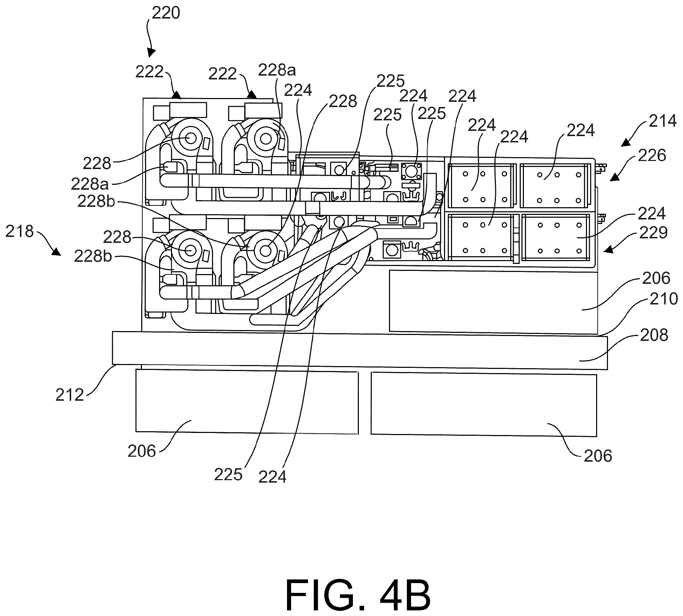

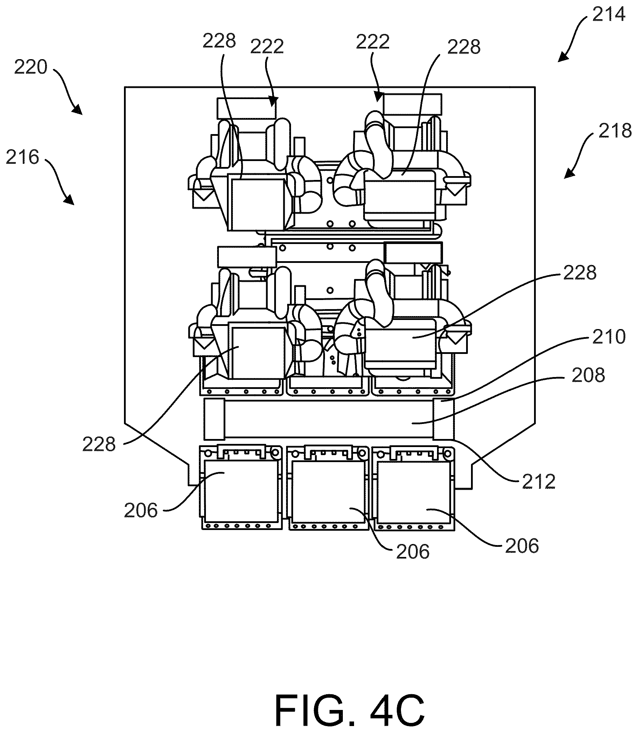

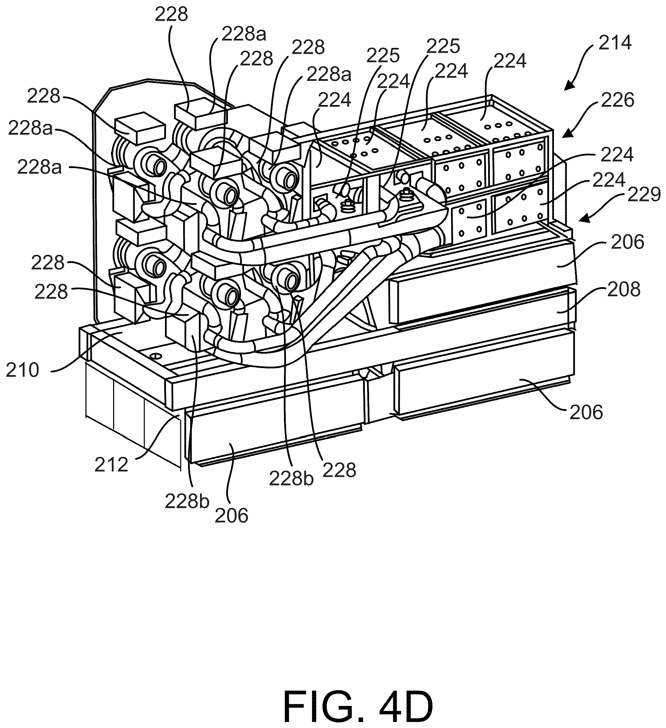

FIG. **4A** shows a first side **216** of fuel cell arrangement **214**, FIG. **4B** shows a second side **218** of fuel cell arrangement **214**, FIG. **4C** illustrates a front end **220** of fuel cell arrangement **214,** and FIG. **4D** illustrates a perspective view of fuel cell arrangement **214**. As shown referring to all of FIG. **4A-4D**, fuel cell arrangement **214** may include eight balance-of-plant modules **228,** arranged in two side-by-side stacked pairs **222** on each of first side **216** and second side **218.** In other words, fuel cell arrangement **214** may include four balance-of-plant modules **228** on first side **216** and four balance-of-plant modules **228** on second side **218**. As mentioned above, balance-of-plant modules **228** may be arranged in two stacked side-by-side pairs **222.** In other words, each pair **222** includes a top balance-of-plant module **228a** and a bottom balance-of-plant module **228b**. Each bottom balance-of-plant module **228b** may be positioned and/or mounted on top surface **210** of power module support frame **208**. Balance-of-plant modules **228** may be arranged closest to front end **220** of fuel cell arrangement **214** relative to fuel cell modules **224** as discussed further below.

Fuel cell arrangement **214** may include eight fuel cell modules **224** arranged in two rows of four. In other words, fuel cell arrangement **214** may include a top row **226** of four fuel cell modules **224** and a bottom row **229** of four fuel cell modules **224.** Fuel cell modules **224** may be positioned behind balance-of-plant modules **228** relative to front end **220** of fuel cell arrangement **214.** Each fuel cell module **224** may have a connection end **225** configured to facilitate coupling of the fuel cell module **224** with its respective balance-of-plant module **228**. For example, as illustrated especially in FIGS. **4A**, **4B**, and **4D**, four fuel cell modules **224** may have a connection end **225** facing first side **216** of fuel cell arrangement **214** to facilitate coupling with the four balance-of-plant modules **228** on first side **216** of fuel cell arrangement **214**. Similarly, four fuel cell modules **224** may have a connection end **225** facing second side **218** of fuel cell arrangement **214** to facilitate coupling with the four balance-of-plant modules **228** on second side **218** of fuel cell arrangement **214**.

Fuel cell modules **224** may be positioned a first layer of one or more battery module(s) **206** which are positioned and/or mounted on top surface **210** of power module support frame **208**. In some embodiments, as illustrated, a second layer of one or more battery module(s) **206** may be mounted underneath power module support frame **208**, e.g., to bottom surface **212** of power module support frame **208**. In some embodiments, fuel cell arrangement **214** may only have one layer of battery module(s) **206** mounted either above or below power support module **208**. In other embodiments, fuel cell arrangement **201** may not have any battery module **206** layers. In yet other embodiments, fuel cell arrangement **214** may include a greater layer of battery module(s) **206** mounted above and/or below power module support frame **208**. The positioning of fuel cell modules **224** on at least one layer of battery module(s) **206** may position fuel cell modules **224** in a way that facilitates connection of each fuel cell module **224** to its corresponding balance-of-plant module **228**.

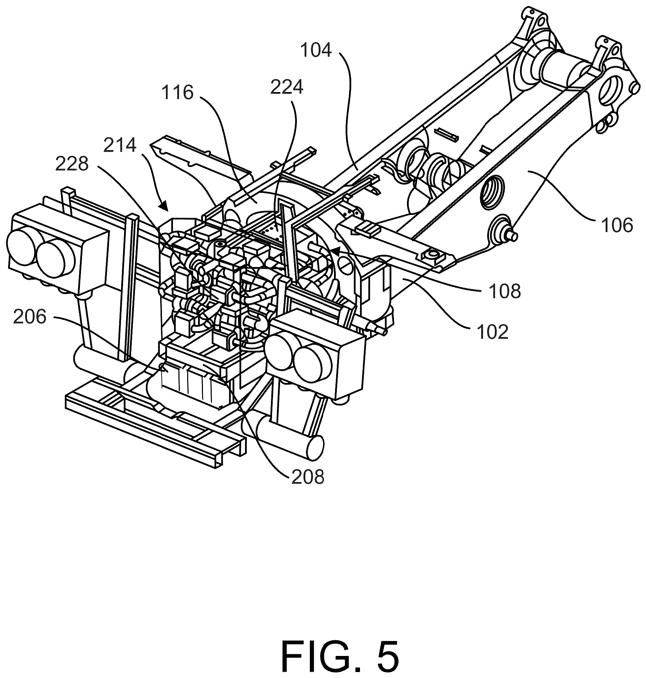

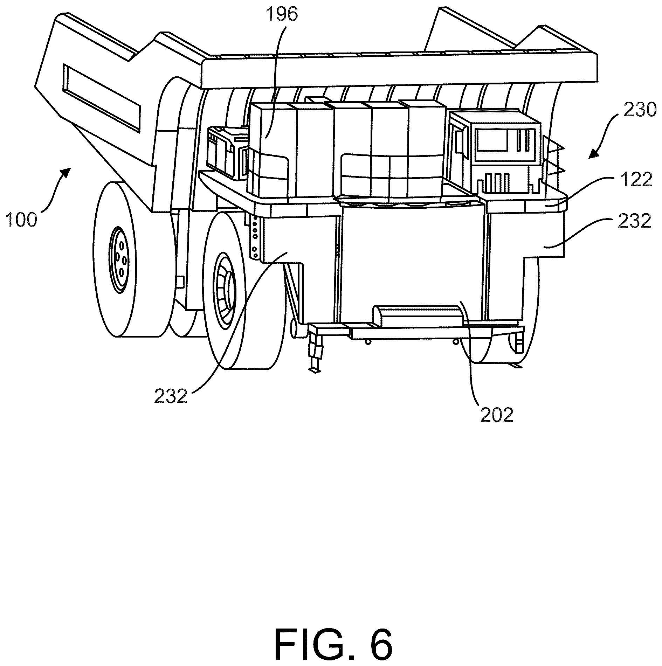

FIG. 5 illustrates the positioning of fuel cell arrangement **214** in chassis **102.** As illustrated, fuel cell modules **224** arranged on the first layer of battery module(s) **206** (FIGS. 4A-**4D**) may be appropriately sized and shaped to fit within horse collar **116** and extend into space **108** between first frame member **104** and second frame member **106** of chassis **102** behind horse collar **116**. Balance-of-plant modules **228** may be of a height too great to fit within horse collar **116** as illustrated in FIG. **5**. In such an arrangement, balance-of-plant modules **228** may be positioned forward of horse collar **116** while fuel cell modules **224** extend through horse collar **116** and into space **108**. As illustrated in FIG. **6**, a radiator **202** may be positioned on a front end **230** of mining truck **100**, flanked on either side or both sides by one or more chillers **232**. A DC/DC system **196**, along with other electronics and subsystems, may be positioned on deck **122** of mining truck **100**, as discussed further herein.

While fuel cell arrangement **214** is discussed as having a specific number of fuel cell modules **224** and balance-of-plant modules **228**, it is within the scope of the disclosure to have a greater or fewer number of fuel cell modules **224** and/or balance-of-plant modules **228.** Further, it is within the scope of the disclosure for the balance-of-plant modules **228** and/or fuel cell modules **224** alternately arranged relative to each other and/or to other components discussed further herein. The specific arrangement and number of the fuel cell modules **224** and balance-of-plant modules **228** as discussed relative to fuel cell arrangement **214** as described herein are meant to be exemplary in nature only and may vary according to the needs and desire of a user. For example, while the arrangement of FIG. **5** illustrates the positioning of fuel cell arrangement **214** within horse collar **116** of chassis **102,** embodiments described further herein may position fuel cell modules **224** and/or balance-of-plant modules **228** at different positions relative to the corresponding mining truck **100.**

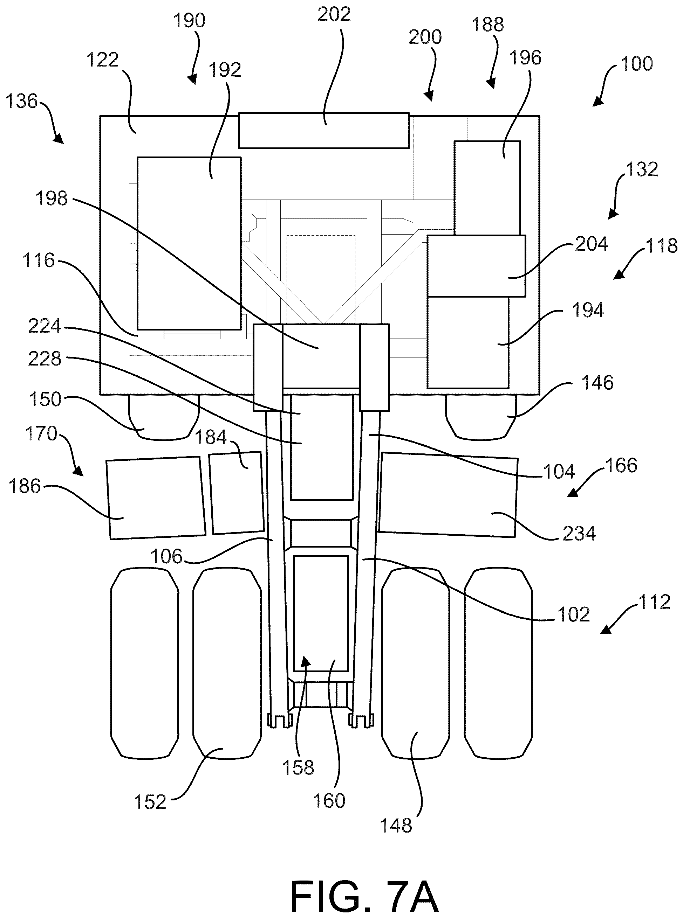

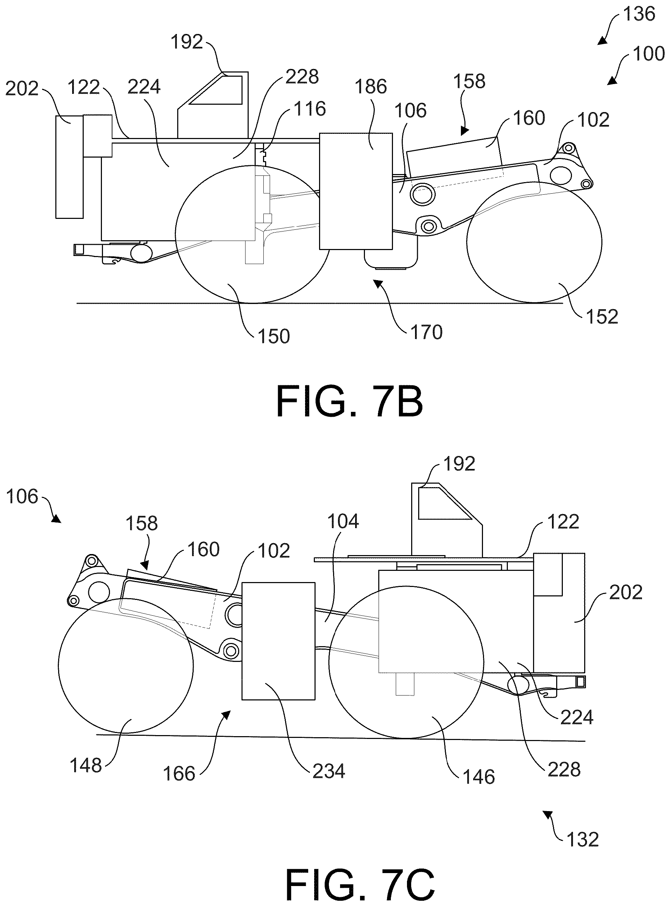

Now referring to FIGS. **7A-7C**, an exemplary architecture of a mining truck **100** is schematically illustrated. Mining truck **100** as illustrated in FIGS. **7A-7C** includes the same components and details as described above, except as described further herein, with like components associated with like reference numbers.

As described above, mining truck **100** may include chassis **102** having first frame member **104** and second frame member **106**. First wheel **146** may be mounted at a forward position in forward region **118** on first side **132** of chassis **102**, i.e., adjacent to first frame member **104**. Second wheel **148** may be mounted at a rearward position in rear region **112** on first side **132** of chassis **102,** i.e., adjacent to first frame member **104**, and spaced apart from first wheel **146** to define first side saddle **166** therebetween. A primary hydrogen tank **234** may be mounted to first side **132** of chassis **102** within first side saddle.

Mounting of primary hydrogen tank **234** within first side saddle **166** may facilitate an even balance of mining truck **100** when one or more tanks are also mounted to chassis **102** within second side saddle **170** as discussed further herein. It is also within the scope of this disclosure that primary hydrogen tank **234** and/or additional hydrogen tanks may be alternately positioned, whether in a single, unified space or in a plurality of places throughout architecture of mining truck **100** (i.e., on deck **122**, within rear region space **158,** or another placement).

Still referring to FIGS. **7A-7C**, third wheel **150** may be mounted at a forward position in forward region **118** on second side **136** of chassis **102**, i.e., adjacent to second frame member **106.** Fourth wheel **152** may be mounted at a rearward position in rear region **112** on second side **136** of chassis **102**, i.e., adjacent to second frame member **106**, and spaced apart from third wheel **150** to define second side saddle **170** therebetween. A hydraulic liquid tank **184** may be mounted to second frame member **106** on second side **136** of chassis **102** within second side saddle **170.** Hydraulic liquid tank **184** may serve as a reservoir for containing excess hydraulic fluid for operation of mining truck **100** and/or serve to hold a supply of hydraulic fluid for operation of mining truck **100.** A second liquid tank **186** is mounted to chassis **102** within second side saddle **170.** In some embodiments, second liquid tank **186** may be an auxiliary hydrogen tank.

As illustrated, hydraulic liquid tank **184** may be mounted to chassis **102** at an interior position of second side saddle **170**, while second liquid tank **186** may be mounted to chassis **102** at an exterior position of second side saddle **170**, so that hydraulic liquid tank **184** is substantially in-between the chassis and the second liquid tank **186**. In other embodiments, hydraulic liquid tank **184** and second liquid tank **186** may be alternately arranged. For example, in some embodiments, second liquid tank **186** may be mounted to chassis **102** at an interior position of second side saddle **170**, while hydraulic liquid tank **184** may be mounted to chassis **102** at an exterior position of second side saddle **170**.

In yet other embodiments, hydraulic liquid tank **184** and second liquid tank **186** may be both arranged at a generally interior position of second side saddle **170** so that one of hydraulic liquid tank **184** and second liquid tank **186** is positioned at a forward position near third wheel **150**, and the other of the hydraulic liquid tank **184** and second liquid tank **186** is positioned at a rearward position near fourth wheel **152**. In some embodiments, a third liquid tank, for example, a second auxiliary hydrogen tank, may be mounted to the chassis **102** within the second side saddle **170.** In other embodiments, the third liquid tank may be mounted to chassis **102** within the first side saddle **166** in place of or in tandem with primary hydraulic tank **234.** While second liquid tank **186** and the third liquid tank are described as auxiliary hydrogen tanks above, such tanks may contain another fluid, such as, for example, fuel, including diesel, methanol, ammonia, or other fuels appropriate for fueling the fuel cell modules of the vehicle.

Rear region space **158** defined by chassis **102** between second wheel **148** and fourth wheel **152** may include a vehicle subsystem **160** mounted therein, such as an aftertreatment system, a heating system for a bed of mining truck **100**, and/or an exhaust muffler as described above. In some embodiments rear region space **158** may remain empty of any vehicle subsystems. It is within the scope of the disclosure that other subsystems beyond those listed explicitly herein may be mounted within rear region space **158.**

Fuel cell modules **224** and/or balance-of-plant modules **228** may be positioned within horse collar **116** and/or extend in front of and/or behind horse collar **116** of chassis **102.** Fuel cell modules **224** and/or balance-of-plant modules **228** may be in first fuel cell arrangement **201** or second fuel cell arrangement **214** as discussed above in reference to FIGS. **3-5**.

As discussed above, deck **122** may be supported at a forward position by chassis **102**. Deck **122** may include a first region **188** associated with a first side of deck **122** corresponding with first side **132** of chassis **102** and a second region **190** associated with a second side of deck **122** corresponding with second side **136** of chassis **102.** First region **188** and second region **190** are illustrated by dividing line "**D**". An operator cab **192** may be arranged within second region **190** of deck **122.** Operator cab **192** is configured to house an operator during operation of mining truck **100**, along with controls necessary or desired for said operation of mining truck **100**.

For example, mining truck **100** may include a thermal management system **200**, which may include a radiator **202** and a thermal manager **204**. In some embodiments, radiator **202** and thermal manager **204** may be integrated, i.e., one thermal management component may serve as both radiator **202** and thermal manager **204**. In other embodiments, radiator **202** may service both the powertrain and DC/DC system **196,** while thermal manager **204** only services battery module(s) **206.** In yet other embodiments, radiator **202** may service engine **142**, battery thermal manager **204** may service battery module(s) **206**, and a third thermal manager or heat exchanger (not shown) may service DC/DC system **196**.

As illustrated, radiator **202** may be mounted to a front of mining truck **100**, or, in other words, at a full forward position relative to deck **122.** For example, radiator **202** may be mounted at the first end portion of chassis **102** adjacent the first end of chassis **102.** In some embodiments, radiator **202** may be, at least in part, mounted to a forward edge of deck **122** so that radiator **202** extends downward from deck **122.** In other embodiments, radiator **202** may be mounted to a front of mining truck **100** below deck **122.** In yet other embodiments, radiator **202** may be mounted at another position of mining truck **100**. An air cleaner may be integrated with or positioned immediately adjacent to radiator **202** to mitigate the presence of dirt, dust, and other contaminants.

A resistor grid **194** may be arranged within first region **188** of deck **122** and may be positioned at a generally rearward position of first region **188** of deck **122.** Thermal manager **204** may be positioned forward of resistor grid **194**, with DC/DC system **196** positioned forward for thermal manager **204,** so that thermal manager **204** is positioned generally between resistor grid **194** and DC/DC system **196**. The positioning of the components herein provides access to service panels on top of resistor grid **194**, while further accounting for positioning of thermal manager **204** in an efficient position relative to DC/DC system **196**. The arrangement of the components as described herein may also mitigate interference with line-of-sight mirrors (not shown) of mining truck **100** from operator cab **192** positioned within second region **190** of deck **122.**

An inverter cabinet may be positioned at least partially in first region **188** of deck **122** and at least partially in second region **190** of deck **122.** For example, inverter cabinet **198** may be equally positioned in first region **188** and second region **190** or, in some embodiments, be positioned so that a majority of inverter cabinet **198** is in first region **188.** In other embodiments, inverter cabinet **198** may be positioned so that a majority of inverter cabinet **198** is in second region **190.** As illustrated, inverter cabinet **198** may be positioned within a rear portion of deck **122.** The positioning of inverter cabinet **198** in this manner may provide an open area for positioning of additional mining truck components, such as an on-board trolley system for use with an overhead trolley.

The arrangement of components on the deck as described herein are exemplary in nature and may be altered within the scope of the disclosure. For example, in some embodiments, first region **188** and second region **190** may be mirrored or switched. In other embodiments, components may be move relative to one another and/or relative to deck **122.** For example, in some embodiments, DC/DC system **196** may be positioned on top of resistor grid **194** so that DC/DC system **196** and resistor grid **194** are in a vertically stacked arrangement. Other arrangements of components are within the scope of the disclosure.

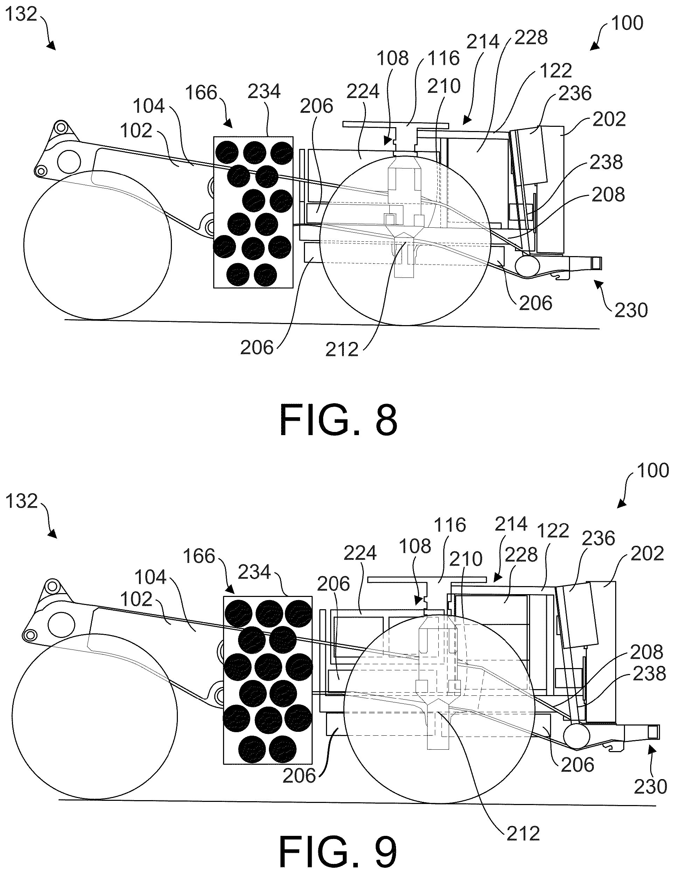

Now referring to FIG. **8**, an exemplary architecture of mining truck **100** is illustrated from first side **132** of chassis **102** and mining truck **100.** As discussed above in relation to the exemplary architecture illustrated in FIGS. **7A-7B**, primary hydrogen tank **234** may be positioned within first side saddle **166** and mounted to, for example, first frame member **104** of chassis **102.** Radiator **202** may be mounted at the forward-most position of deck **122**, i.e., at a first end portion of chassis **102** adjacent the first end of chassis **102**, and, for example, adjacent to a forward-most edge of deck **122** so that radiator **202** extends downward over front end **230** of mining truck **100.** An air cleaner **236** may be positioned behind radiator **202** between radiator **202** and a fuel cell arrangement as described further herein; the air cleaner **236** configured to mitigate the presence of contaminants near the fuel cell arrangement. One or more electric fans **238** may also be positioned between radiator **202** and the fuel cell arrangement to assist with thermal management of the fuel cell arrangement and/or other components of mining truck **100.**

The fuel cell arrangement illustrated in FIG. **8** may be consistent with fuel cell arrangement **214** as described above in relation to FIGS. **4A-4D****.** For example, fuel cell modules) **224** are arranged on one or more battery module(s) **206** positioned on top surface **210** of power module support frame **208**. Fuel cell module(s) **224** may be arranged so that they are received within horse collar **116** of chassis **102** as described further herein, while remotely arranged balance-of-plant module(s) **228** are positioned at a forward position relative to horse collar **116**. As illustrated, one or more battery module(s) **206** may also be mounted to bottom surface **212** of power module support frame **208**. Fuel cell module(s) **224**, balance-of-plant module(s) **228**, and battery module(s) **206** may be mounted to power module support frame **208**, which is then received within horse collar **116** of chassis **102** and mounted to chassis **102** so that the fuel cell module(s) **224**, balance-of-plant module(s) **228**, and battery module(s) **206** are arranged relative to mining truck **100** as illustrated and further described above.

Battery module(s) **206**, balance-of-plant module(s) **228**, and fuel cell module(s) **224** may be mounted to power module support frame **208,** which is then loaded into position relative to chassis **102** and mounted to chassis **102** between first frame member **104** and second frame member **106** (FIG. 1), i.e., within space **108.** Power module support frame **208** may extend through horse collar **116** of chassis **102** so that power module support frame **208** extends forward of horse collar **116** and rearward of horse collar **116.** Power module support frame **208** may provide a mounting surface for battery module(s) **206**, fuel cell module(s) **224,** and balance-of-plant module(s) **228**, thereby providing support to said components and/or to other components as discussed further herein in reference with other exemplary architectures. Power module support frame **208** may be shaped and sized to fit within space **108** of chassis **102** and therefore may further provide a footprint for the arrangement of components to be mounted within space **108** of mining truck **100** in this and other exemplary architectures as discussed further herein.

Referring to FIG. **9**, another exemplary architecture of mining truck **100** is illustrated from first side **132** of chassis **102** and mining truck **100.** Similar to architectures described above, primary hydrogen tank **234** may be positioned within first side saddle **166** and mounted to, for example, first frame member **104** of chassis **102.** Radiator **202** may be mounted at the forward-most position of deck **122**, i.e., at a first end portion of chassis **102** adjacent the first end of chassis **102**, and, for example, adjacent to a forward-most edge of deck **122** so that radiator **202** extends downward over front end **230** of mining truck **100.** Air cleaner **236** may be positioned behind radiator **202** between radiator **202** and a fuel cell arrangement as described further herein. Air cleaner **236** may be configured to mitigate the presence of contaminants near the fuel cell arrangement. One or more electric fans **238** may also be positioned between radiator **202** and the fuel cell arrangement to assist with thermal management of the fuel cell arrangement and/or other components of mining truck **100.**

The fuel cell arrangement illustrated in FIG. **9** may include a remote balance-of-plant module arrangement similar to that of fuel cell arrangement **214** (FIGS. **4A-4D**) or an integrated fuel cell arrangement similar to that of fuel cell arrangement **201** (FIG. **3**). A first set **240** of fuel cell modules **224** and balance-of-plant modules **228** may be arranged at a forward position of power module support frame **208** with a second set **242** of fuel cell modules **224** and balance-of-plant modules **228** arranged at a rearward position of power module support frame **208**.

First set **240** may be mounted to top surface **210** of power module support frame **208** with balance-of-plant modules **228** positioned at the forward-most position of power module support frame **208** and corresponding fuel cell modules **224** extending rearward from balance-of-plant modules **228.** Second set **242** may be mounted to a first layer of battery module(s) **206** mounted to top surface **210** of power module support frame **208,** with corresponding balance-of-plant modules **228** positioned adjacent to one of first member **104** and second member **106** (FIG. **1**) of chassis **102** and corresponding fuel cell modules **224** extending toward the other of first member **104** and second member **106** (FIG. **1**) of chassis **102.** As illustrated, one or more battery module(s) **206** may also be mounted to bottom surface **212** of power module support frame **208.** Fuel cell modules **224**, balance-of-plant modules **228,** and battery module(s) **206** may be mounted to power module support frame **208,** which is then received within horse collar **116** of chassis **102** and mounted to chassis **102** so that the fuel cell modules **224,** balance-of-plant modules **228**, and battery module(s) **206** are arranged relative to mining truck **100** as illustrated and further described above.

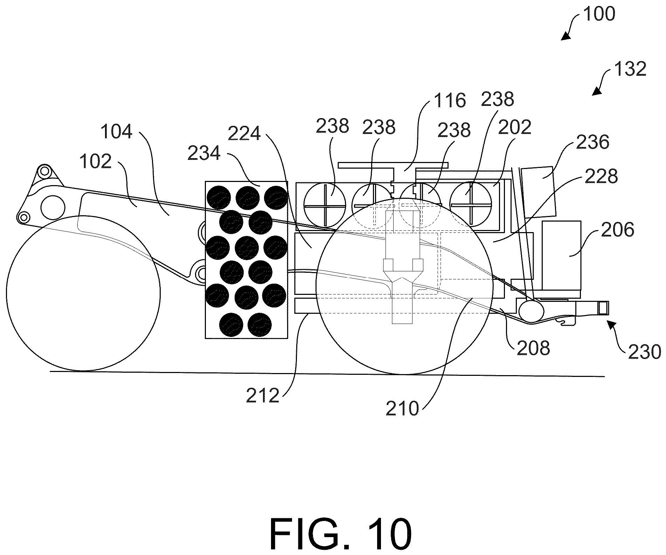

Another exemplary architecture of mining truck **100** is illustrated in FIG. **10** from first side **132** of chassis **102** and mining truck **100.** Similar to architectures described above, primary hydrogen tank **234** may be positioned within first side saddle **166** and mounted to, for example, first frame member **104** of chassis **102.** Battery module(s) **206** may be mounted to front end **230** of mining truck **100** and, e.g., at a forward-most position of mining truck **100** and/or at the first end portion of the chassis **102**, and/or adjacent to the first end of the chassis **102.** Air cleaner **236** may be positioned above and/or behind battery module(s) **206** adjacent to radiator **202** and/or a fuel cell arrangement as described further herein. Air cleaner **236** may be configured to mitigate the presence of contaminants near the fuel cell arrangement.

The fuel cell arrangement illustrated in FIG. **10** may include a remote balance-of-plant module arrangement similar to that of fuel cell arrangement **214** (FIGS. **4A-4D**). Similar to fuel cell arrangement **214** (FIGS. **4A-4D**), balance-of-plant module(s) **228** may be positioned at a forward position of power module support frame **208** and mounted to top surface **210** of power module support frame **208.** Corresponding fuel cell module(s) **224** may be positioned rearward of balance-of-plant modules **228** and mounted to top surface **210** of power module support frame **208** so that balance-of-plant module(s) **228** are positioned forward of horse collar **116** and fuel cell stack(s) are positioned within and rearward of horse collar **116**.

Radiator **202** may be mounted on top of fuel cell module(s) **224** and/or balance-of-plant module(s) 228. In some embodiments, radiator **202** may be angled relative to fuel cell module(s) **224** to define a triangular space between radiator **202** and fuel cell module(s) **224.** In some embodiments, radiator **202** and fuel cell module(s) **224** may define an angle of about 20°, 30°, 40°, 45°, 50°, 60°, 70°, or any angle therebetween. In some embodiments, the angle defined between radiator **202** and fuel cell module(s) **224** may be lesser than 20° or greater than 70°.

Electric fans **238** may be arranged adjacent to radiator **202** and mounted on top of fuel cell module(s) **224** and/or balance-of-plant module(s) **228.** For example, electric fans **238** may be arranged adjacent to radiator **202** on first side **132** of chassis **102** as shown. In other embodiments, electric fans **238** may be arranged adjacent radiator **202** on second side **136** (FIG. **1**) of chassis **102** in addition to or instead of first side **132** of chassis **102.** Electric fans **238** may assist with thermal management of the fuel cell arrangement and/or other components of mining truck **100**. In some embodiments, additional battery module(s) may be mounted to a bottom surface of power module support frame **208.**

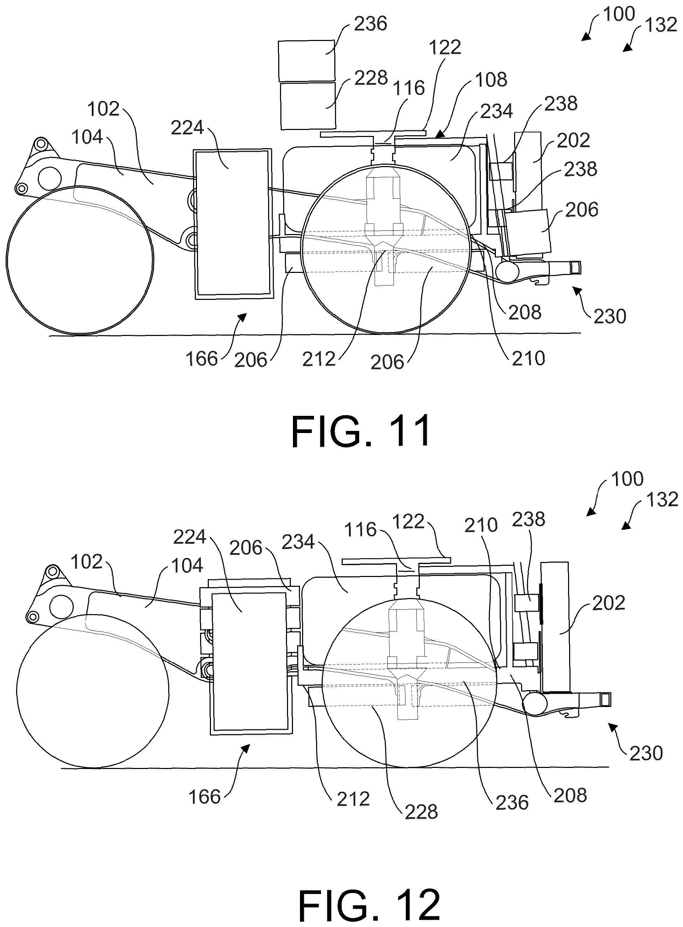

Referring to FIG. 11, another exemplary architecture of mining truck **100** is illustrated from first side **132** of chassis **102** and mining truck **100.** As illustrated, primary hydrogen tank **234** may be mounted to top surface **210** of power module support frame **208** and positioned within and extending forward and/or rearward from horse collar **116** of chassis **102.** Battery module(s) **206** may be mounted to bottom surface **212** of power module support frame **208**. With primary hydrogen tank **234** positioned within space **108** of chassis **102,** fuel cell module(s) **224** may be mounted within first side saddle **166** and mounted to, for example, first frame member **104** of chassis **102.** In some embodiments, fuel cell(s) may be packaged in a fuel cell stack module similar to a battery pack module as illustrated and described in co-pending U.S. Application No. 18/934,913 filed on 1 November 2024 and entitled "BATTERY PACK MODULE FOR HAUL TRUCK". The positioning of fuel cell module(s) **224** within first side saddle **166** may provide the same benefits and advantages as the positioning of the primary hydrogen tank within the first side saddle as described above.

Radiator **202** may be mounted to the forward-most position of deck **122** i.e., at a first end portion of chassis **102** adjacent the first end of chassis **102,** and, for example, adjacent to a forward-most edge of deck **122** so that radiator **202** extends downward over front end **230** of mining truck **100**. One or more electric fans **238** may be positioned between radiator **202** and primary hydrogen tank **234** to assist with thermal management of components of mining truck **100**. Additional battery module(s) **206** may be arranged adjacent to radiator **202**. For example, battery module(s) **206** may be arranged next to radiator **202** on first side **132** of chassis **102** as illustrated. In other embodiments, additional battery module(s) **206** may also or alternately be arranged next to radiator **202** on second side **136** (FIG. **1**) of chassis **102.**

Balance-of-plant module(s) **228** may be mounted on deck **122** and have a remote arrangement with corresponding fuel cell module(s) **224** mounted within first side saddle **166** of mining truck **100**. Air cleaner **236** may be positioned on top of balance-of-plant module(s) **228** as illustrated. In other embodiments, air cleaner **236** may be alternately arranged on deck **122** or positioned in another arrangement relative to mining truck **100.** Air cleaner **236** may be configured to mitigate the presence of contaminants near balance-of-plant module(s) **228** and/or fuel cell module(s) **224.**

FIG. **12** illustrates another exemplary architecture of mining truck **100** from first side **132** of chassis **102** and mining truck **100.** As with the exemplary architecture of FIG. **11** described above, primary hydrogen tank **234** may be mounted to top surface **210** of power module support frame **208** and positioned within and extending forward and/or rearward from horse collar **116** of chassis **102.** Balance-of-plant module(s) **228** may be mounted to bottom surface **212** of power module support frame 208. Air cleaner **236** may be mounted to bottom surface **212** of power module support frame **208** at a forward position relative to balance-of-plant module(s) **228** and be configured to mitigate the presence of contaminants.

Fuel cell module(s) **224** may be mounted within first side saddle **166** and mounted to, for example, first frame member **104** of chassis **102,** fuel cell module(s) **224** having a remote arrangement with corresponding balance-of-plant module(s) **228** mounted to bottom surface **212** of power module support frame **208**. In some embodiments, fuel cell(s) may be packaged in a fuel cell module similar to a battery pack module as described above.

Battery module(s) **206** may be mounted within second side saddle **170** (FIG. **1**) and mounted to, for example, second frame member **106** (FIG. **1**) of chassis **102,** either directly or via hydraulic liquid tank **184** as described in relation to FIGS. **7A-7C** above; in other words, battery module(s) **206** may be positioned similarly and/or in place of second liquid tank **186** (FIGS. **7A-7C**) described above. Battery module(s) **206** may be packaged in a battery pack module similar to that illustrated and described in co-pending U.S. Application No. 18/934,913 filed on 1 November 2024 and entitled "BATTERY PACK MODULE FOR HAUL TRUCK". The positioning of battery module(s) **206** within second side saddle **170** (FIG. **1**) may provide the same benefits and advantages as the positioning of the second liquid tank within the second side saddle as described above.

Radiator **202** may be mounted to the forward-most position of deck **122** i.e., at a first end portion of chassis **102** adjacent the first end of chassis **102,** and, for example, adjacent to forward-most edge of deck **122** so that radiator **202** extends downward over front end **230** of mining truck **100.** One or more electric fans **238** may be positioned between radiator **202** and primary hydrogen tank **234** to assist with thermal management of components of mining truck **100.**

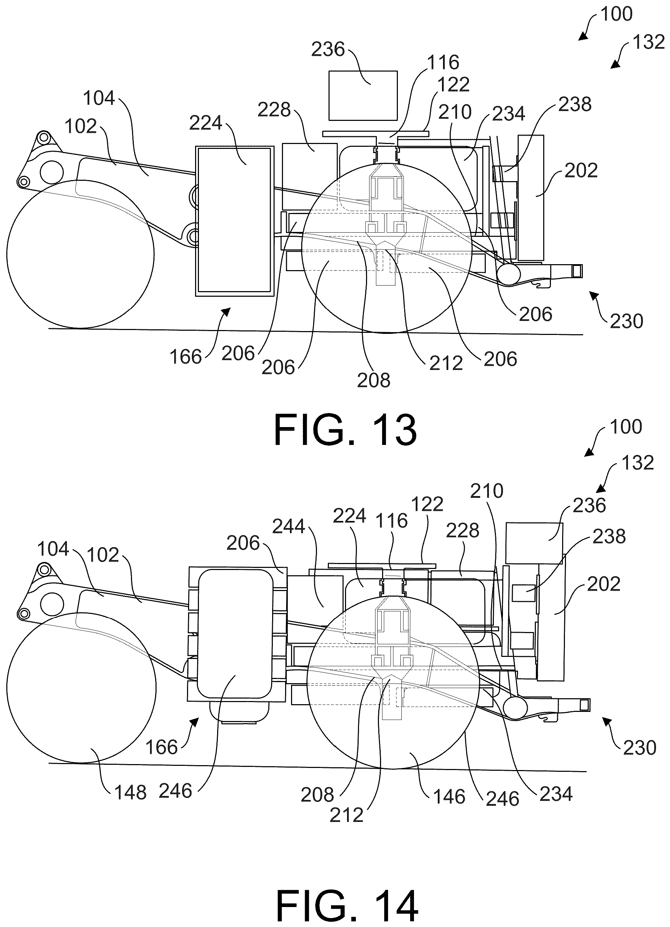

Yet another exemplary architecture of mining truck **100** is illustrated in FIG. **13**, wherein the exemplary architecture is illustrated from a view of first side **132** of chassis **102** and mining truck **100**. As illustrated, a first layer of battery module(s) **206** may be mounted to top surface **210** of power module support frame **208**. Primary hydrogen tank **234** may be mounted to the first layer of battery module(s) **206** at a forward position of power module support frame **208** so that primary hydrogen tank **234** is positioned within horse collar **116** of chassis **102** and extends forward of horse collar **116**. In some embodiments, such as the one illustrated, primary hydrogen tank **234** may also extend rearward of horse collar **116,** although primary hydrogen tank **234** may extend further toward a forward position of horse collar **116** than toward a rearward position of horse collar **116**. Balance-of-plant module(s) **228** may also be mounted to the first layer of battery module(s) **206** at a rearward position of power module support frame **208** relative to primary hydrogen tank **234**. An additional layer of battery module(s) **206** may be mounted to bottom surface **212** of power module support frame **208** as illustrated. However, in some embodiments, there may not be battery module(s) mounted to the bottom surface of the power module support frame and/or to the top surface of the power module support frame.

Fuel cell module(s) **224** may be mounted within first side saddle **166** and mounted to, for example, first frame member **104** of chassis **102**, fuel cell module(s) **224** having a remote arrangement with corresponding balance-of-plant module(s) **228** mounted to power module support frame **208** as described above. In some embodiments, fuel cell(s) **224** may be packaged in a fuel cell stack module similar to a battery pack module as described above. Radiator **202** may be mounted to a forward-most position of deck **122** i.e., at a first end portion of chassis **102** adjacent the first end of chassis **102**, and, for example, adjacent to forward-most edge of deck **122** so that radiator **202** extends downward over front end **230** of mining truck **100.** One or more electric fans **238** may be positioned between radiator **202** and primary hydrogen tank **234** to assist with thermal management of components of mining truck **100.** Air cleaner **236** may be mounted to deck **122** to mitigate the presence of contaminants. In some embodiments, air cleaner **236** may be mounted to an air duct inlet rather than directly to a surface of deck **122.**

Now referring to FIG. **14**, another exemplary architecture is illustrated from first side **132** of chassis **102** and mining truck **100.** As illustrated, primary hydrogen tank **234** may be mounted to power module support frame **208,** with fuel cell module(s) **224** and corresponding balance-of-plant module(s) **228** mounted above primary hydrogen tank **234** in a remote arrangement (i.e., similar to fuel cell arrangement **214** discussed above). In some embodiments, such as the one illustrated, primary hydrogen tank **234** may be mounted to one or more rails **245** of power module support frame **208** which extend at least a length of primary hydrogen tank **234**.

Fuel cell module(s) **224** and balance-of-plant module(s) **228** may be mounted to a shelf structure **244** of power module support frame **208**. In other embodiments, fuel cell module(s) **224** and corresponding balance-of-plant module(s) **228** may be mounted to primary hydrogen tank **234** or power module support frame **208** via other mechanisms. Power module support frame **208,** primary hydrogen tank **234**, fuel cell module(s) **224,** and balance-of-plant module(s) **228** may be arranged relative to chassis **102** so that primary hydrogen tank **234** and fuel cell module(s) **224** extend through horse collar **116** of chassis **102** while balance-of-plant module(s) **228** are arranged at a forward position relative to fuel cell module(s) **224** and horse collar **116**.

An additional hydrogen tank **246** may be mounted within first side saddle **166** and mounted to, for example, first frame member **104** of chassis **102**. Battery module(s) **206** may be mounted within second side saddle **170** (FIG. **1**) and mounted to, for example, second frame member **106** (FIG. **1**) of chassis **102**, either directly or via hydraulic liquid tank **184** as described in relation to FIGS. **7A-7C** above; in other words, battery module(s) **206** may be positioned similarly and/or in place of second liquid tank **186** (FIGS. **7A-7C**) described above. Battery module(s) **206** may be packaged in a battery pack module as described above. The positioning of battery module(s) **206** within second side saddle **170** (FIG. **1**) may provide the same benefits and advantages as the positioning of the second liquid tank within the second side saddle as described above.

Some embodiments may not include additional hydrogen tank **246.** In other words, additional hydrogen tank **246** may be optional and, in some embodiments, first side saddle **166** may remain an empty space between first wheel **146** and second wheel **148.** In other embodiments, battery module(s) **206** may be mounted within first side saddle **166** while hydraulic liquid tank **184** (FIG. **7A**) and/or second liquid tank **186** (FIG. **7A**) remain in second side saddle **170** (FIG. **7A**) to maintain the benefits and advantages of having components mounted within both the first side saddle and the second side saddle as discussed above.

Radiator **202** may be mounted to a forward-most position of deck **122** i.e., at a first end portion of chassis **102** adjacent the first end of chassis **102**, and, for example, adjacent to forward-most edge of deck **122** so that radiator **202** extends downward over front end **230** of mining truck **100**. One or more electric fans **238** may be positioned between radiator **202** and primary hydrogen tank **234** to assist with thermal management of components of mining truck **100.** Air cleaner **236** may be mounted to deck **122** or otherwise adjacent to radiator **202** to mitigate the presence of contaminants.

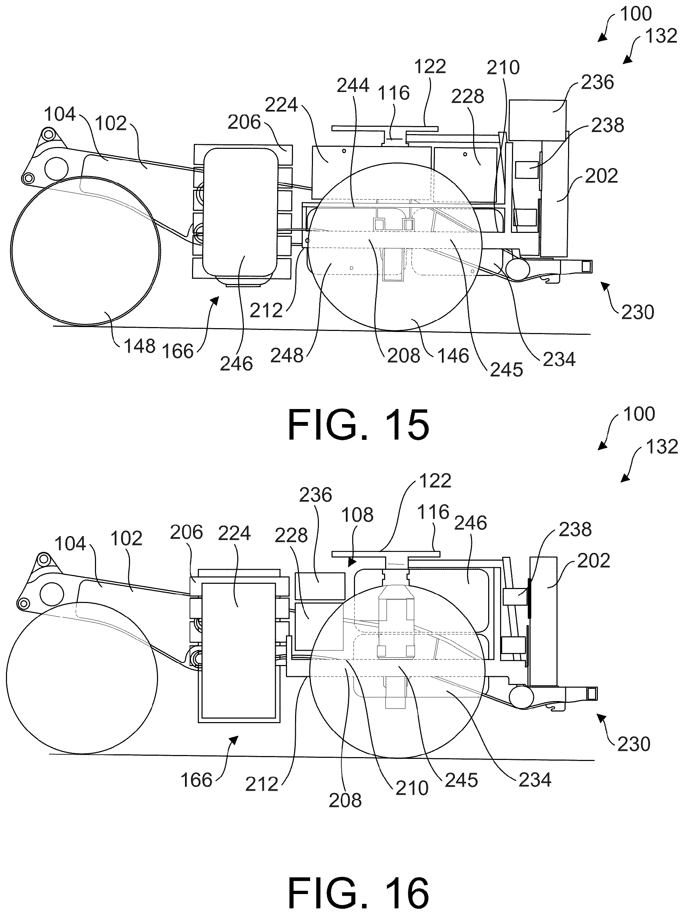

An exemplary architecture illustrated in FIG. **15** is similar to the architecture illustrated in FIG. **14****,** except that, instead of a single primary hydrogen tank, two hydrogen tanks, i.e., primary hydrogen tank **234** and a third hydrogen tank **248**, are mounted to power module support frame **208** in a manner similar to primary hydrogen tank **234** in FIG. **14**. In other words, primary hydrogen tank **234** may be mounted to power module support frame **208** at a forward position, additional hydrogen tank **246** may optionally be mounted in first side saddle **166** as discussed above, and third hydrogen tank **248** may be mounted to power module support frame **208** at a rearward position relative to primary hydrogen tank **234.** In some embodiments, primary hydrogen tank **234** may be mounted at the rearward position while third hydrogen tank **248** is mounted at the forward position. Although third hydrogen tank **248** is described as a "third" hydrogen tank, in some embodiments, additional hydrogen tank **246** may not be included in the architecture. In other words, although described as a "third" hydrogen tank, in some arrangements, third hydrogen tank **248** may be one of two hydrogen tanks within the architecture.

Splitting the arrangement of primary hydrogen tank **234** as illustrated in FIG. **14** into primary hydrogen tank **234** and third hydrogen tank **248** as illustrated in FIG. **15** may increase the scalability and modularity of the arrangement for use in variously sized vehicles, whether mining trucks or other vehicles. The arrangement may further enable inclusion of extra hydrogen on board at any given time, may allow for faster filling of the hydrogen tanks, and may increase flexibility for battery technology and/or the exchange of components within the architecture. In addition, the serviceability of the arrangement may be improved in view of the more manageable size of the hydrogen tanks, including potentially increased inspection and maintenance capabilities.

FIG. **16** illustrates another exemplary architecture of mining truck **100** from first side **132** of chassis **102** and mining truck **100**. As illustrated, primary hydrogen tank **234** may be mounted to power module support frame **208**, with an additional hydrogen tank **246** mounted above primary hydrogen tank **234** in a vertical arrangement. In some embodiments, such as the one illustrated, primary hydrogen tank **234** may be mounted to one or more rails **245** of power module support frame **208** which extend at least a length of primary hydrogen tank **234.** Additional hydrogen tank **246** may be mounted to primary hydrogen tank **234** or power module support frame **208.** Power module support frame **208**, primary hydrogen tank **234,** and additional hydrogen tank **246** may be arranged relative to chassis **102** so that primary hydrogen tank **234** and additional hydrogen tank **246** extend through horse collar **116** of chassis **102.** In some embodiments, primary hydrogen tank **234** and additional hydrogen tank **246** may switch positions. In other words, primary hydrogen tank **234** and additional hydrogen tank **246** may be positioned in a vertical arrangement so that primary hydrogen tank **234** is mounted above additional hydrogen tank **246** or so that additional hydrogen tank **246** is mounted above primary hydrogen tank **234**.

Balance-of-plant module(s) **228** may be mounted to top surface **210** of power module support frame **208** at a rearward position relative to primary hydrogen tank **234** and additional hydrogen tank **246.** As illustrated, balance-of-plant module(s) **228** may also be positioned rearward of horse collar **116** of chassis **102** within space **108**. Air cleaner **236** may be mounted above balance-of-plant module(s) **228** to mitigate the presence of contaminants, either directly to balance-of-plant module(s) **228** or to power module support frame **208.**

Fuel cell module(s) **224** may be mounted within first side saddle **166** and mounted to, for example, first frame member **104** of chassis **102**, fuel cell module(s) **224** having a remote arrangement with corresponding balance-of-plant module(s) **228** mounted to top surface **210** of power module support frame **208.** In some embodiments, fuel cell(s) may be packaged in a fuel cell stack module similar to a battery pack module as described above.

Battery module(s) **206** may be mounted within second side saddle **170** (FIG. **1**) and mounted to, for example, second frame member **106** (FIG**. 1**) of chassis **102,** either directly or via hydraulic liquid tank **184** as described in relation to FIGS. **7A-7C** above; in other words, battery module(s) **206** may be positioned similarly and/or in place of second liquid tank **186** (FIGS. **7A-7C**) described above. Battery module(s) **206** may be packaged in a battery pack module as described above. The positioning of battery module(s) **206** within second side saddle **170** (FIG. **1**) may provide the same benefits and advantages as the positioning of the second liquid tank within the second side saddle as described above.

Radiator **202** may be mounted to the forward-most position of deck **122** i.e., at a first end portion of chassis **102** adjacent the first end of chassis **102,** and, for example, adjacent to forward-most edge of deck **122** so that radiator **202** extends downward over front end **230** of mining truck **100.** One or more electric fans **238** may be positioned between radiator **202** and primary hydrogen tank **234** to assist with thermal management of components of mining truck **100**.

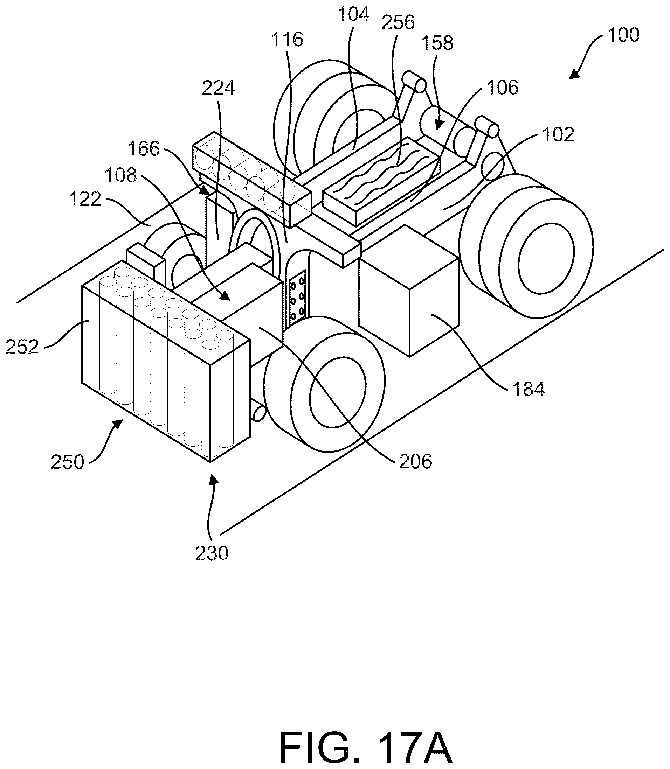

FIGS. **17A-17B** illustrate a perspective view and a top schematic view, respectively of another exemplary architecture of mining truck **100**, wherein one or more hydrogen tanks **250** (e.g., **234**, **246**, **248**, and/or additional hydrogen tanks) are mounted to a front end **230** of mining truck **100** i.e., at a first end portion of chassis **102** adjacent the first end of chassis **102.** The one or more hydrogen tanks **250** may be supported within a pack support **252** mounted to front end **230** of mining truck **100** via chassis **102** or deck **122.** For example, in some embodiments, the one or more hydrogen tanks **250** and/or, in some embodiments, pack support **252**, may be mounted adjacent to the forward-most position of deck **122** and, for example, to or adjacent to forward-most edge of deck **122** so that the one or more hydrogen tanks **250** and/or pack support **252** extends downward over front end **230** of mining truck **100.**

Battery module(s) **206** may be positioned within space **108** between first member **104** and second member **106** of chassis **102** and, for example, within and/or extending forward and/or rearward of horse collar **116.** In some embodiments, battery module(s) **206** may be mounted to a power module support frame as described above. In other embodiments, battery module(s) **206** may be mounted directly to chassis **102** or otherwise mounted into position via other mechanisms.

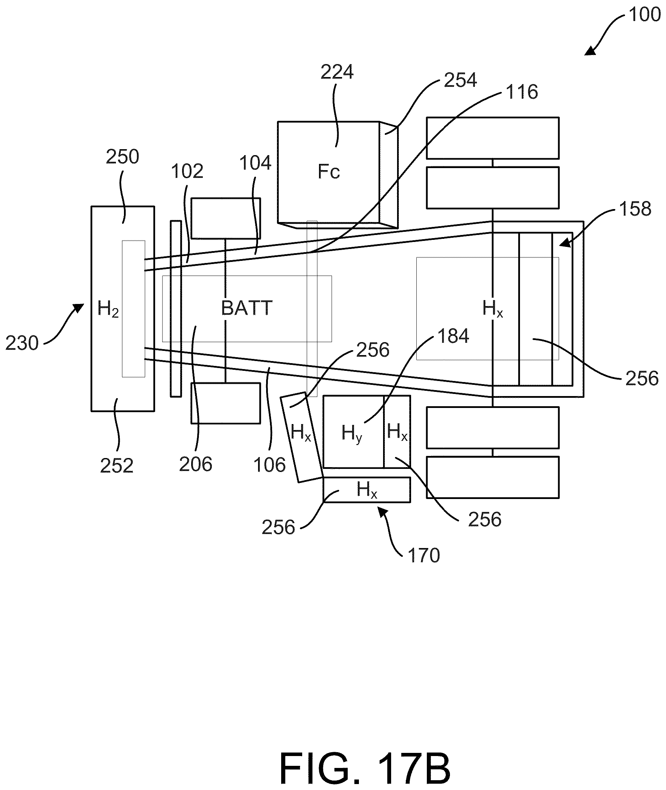

Fuel cell module(s) **224** may be mounted within first side saddle **166** and mounted to, for example, first frame member **104** of chassis **102.** In some embodiments, fuel cell(s) may be packaged in a fuel cell stack module similar to a battery pack module as described above. A space **254** (FIG. **17B**) may be provided rearward of fuel cell module(s) **224** to facilitate mounting of corresponding balance-of-plant module(s), a heat exchanger, and/or other components as discussed further herein.

Balance-of-plant module(s) may be integrated with fuel cell module(s) **224**, packaged within a fuel cell stack module in a remote or integrated arrangement, arranged adjacent to fuel cell module(s) **224** (e.g., within space **254**) in a remote arrangement, and/or otherwise arranged in a remote arrangement within the architecture of mining truck **100.** Hydraulic liquid tank **184** may be mounted within second side saddle **170** and mounted to, for example, second frame member **106** of chassis **102**. One or more heat exchangers **256** may be mounted within rear region space **158** of chassis **102** and/or surrounding hydraulic liquid tank **184** and/or adjacent to fuel cell module(s) **224** (e.g., within space **254**).

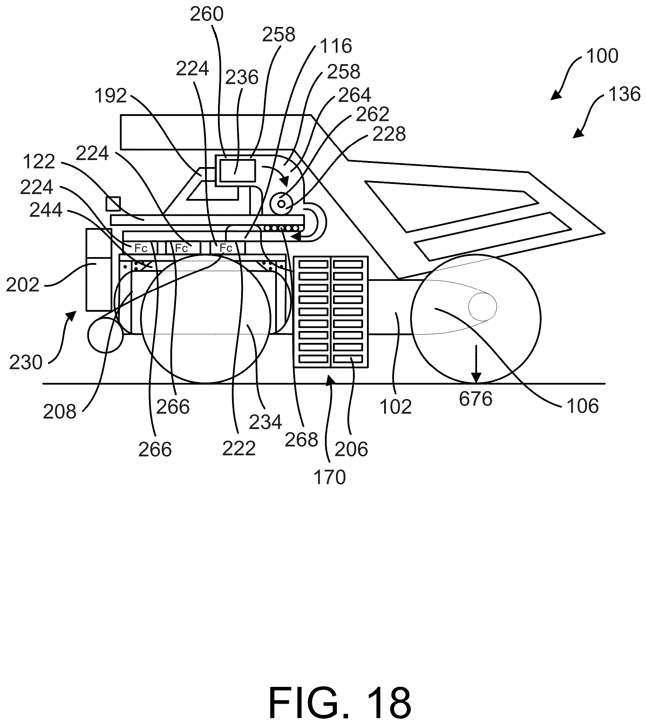

FIG. **18** illustrates an exemplary architecture of mining truck **100** from second side **136** of chassis **102** and mining truck **100**. As illustrated, primary hydrogen tank **234** may be mounted to power module support frame **208**, which may include an additional shelf structure **244** positioned above primary hydrogen tank **234** to support fuel cell module(s) **224** thereon. Primary hydrogen tank **234** and/or fuel cell module(s) **224** may be positioned within horse collar **116** of chassis **102** and may extend forward of and/or rearward of horse collar **116.**

An air inlet assembly **258** may be structured and positioned to direct air from above deck **122** to fuel cell module(s) **224.** For example, an air inlet scoop **260** may be mounted to operator cab **192** or another position on or above deck **122** to encourage flow of air into air inlet assembly **258.** Air cleaner **236** may be mounted to the entrance of or within the entrance of air inlet scoop **260** to mitigate the presence of contaminants within the air provided to fuel cell module(s) **224.** In some embodiments, air cleaner **236** may be positioned in an alternate position within air inlet assembly **258.** One or more air pumps **262** may be positioned within a body **264** of air inlet assembly **258** to facilitate movement of air through air inlet assembly **258.** Balance-of-plant module(s) **228** may also be arranged with air pump(s) **262** within body **264** of air inlet assembly **258.** One or more outlets **266** may be positioned adjacent to each fuel cell module **224** to facilitate connection of the corresponding balance-of-plant module **228** to the respective fuel cell module **224** and delivery of air to each fuel cell module **224.** An exhaust **268** may be disposed between air inlet assembly **258** and deck **122.**

Battery module(s) **206** may be mounted within second side saddle **170** and mounted to, for example, second frame member **106** of chassis **102,** either directly or via hydraulic liquid tank **184** as described in relation to FIGS. **7A-7C**; in other words, battery module(s) **206** may be positioned similarly and/or in place of second liquid tank **186** (FIGS. **7A-7C**) described above. Battery module(s) **206** may be packaged in a battery pack module as described above. In some other embodiments, battery module(s) **206** may otherwise be mounted in first side saddle **166** (FIG. **1**). In yet other embodiments, the first side saddle may remain empty, or another component or additional liquid tank may be mounted therein.

Radiator **202** may be mounted to the forward-most position of deck **122,** i.e., at a first end portion of chassis **102** adjacent the first end of chassis **102**, and, for example, adjacent to forward-most edge of deck **122** so that radiator **202** extends downward over front end **230** of mining truck **100.** One or more electric fans may be positioned between radiator **202** and primary hydrogen tank **234** and/or fuel cell module(s) **224** to assist with thermal management of components of mining truck **100** as described above.

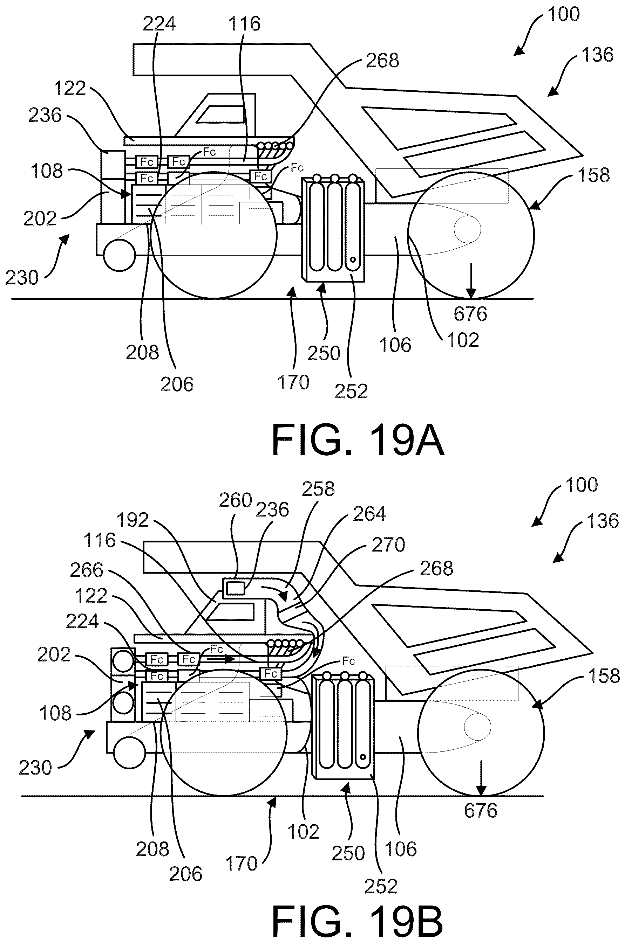

FIG. **19A-19B** illustrates another exemplary architecture of mining truck **100** from second side **136** of chassis **102** and mining truck **100.** As illustrated, battery module(s) **206** may be mounted within space **108** between first frame member **104** (FIG. **1**) and second frame member **106** of chassis **102.** Battery module(s) **206** may be mounted to power module support frame **208** positioned within chassis **102** as described. Fuel cell modules **224** are mounted above battery module(s) **206** and may be mounted directly to battery module(s) **206** and/or to power module support frame **208** via other mechanisms. Fuel cell modules **224** and/or battery module(s) **206** may be positioned within horse collar **116** of chassis **102** and may extend forward of and/or rearward of horse collar **116.** Exhaust **268** may be disposed between deck **122** and fuel cell modules **224.**

One or more hydrogen tanks **250** (e.g., hydrogen tanks **234**, **246**, **248**, and/or other hydrogen tanks) may be mounted within second side saddle **170**. In some embodiments, the one or more hydrogen tanks **250** may be packaged within pack support **252** as described above. The one or more hydrogen tanks **250** and/or pack support **252** may be mounted to, for example, second frame member **106** of chassis **102**, either directly or via hydraulic liquid tank **184** as described in relation to FIGS. **7A-7C**; in other words, the one or more hydrogen tanks **250** may be positioned similarly and/or in place of second liquid tank **186** (FIGS. **7A-7C**) described above. In some other embodiments, the one or more hydrogen tanks **250** and/or pack support **252** may otherwise be mounted in first side saddle **166** (FIG. **1**). In yet other embodiments, the first side saddle may remain empty, or another component or additional liquid tank may be mounted therein as described further herein. A heat exchanger, similar to heat exchanger **256** described above, and/or a DC/DC system, similar to DC/DC system **196** described above, may be mounted within rear region space **158** of chassis **102.**

Radiator **202** may be mounted to the forward-most position of deck **122,** i.e., at a first end portion of chassis **102** adjacent the first end of chassis **102,** and, for example, adjacent to forward-most edge of deck **122** so that radiator **202** extends downward over front end **230** of mining truck **100.** One or more electric fans may be positioned between radiator **202** and battery module(s) **206** and/or fuel cell stack(s) **224** to assist with thermal management of components of mining truck **100** as described above.

As shown in FIG. **19A****,** in some embodiments, air cleaner **236** may be mounted adjacent to radiator **202.** In other embodiments, as shown in FIG. **19B**, mining truck **100** may include an air inlet assembly **258,** similar to that described above. For example, an air inlet scoop **260** may be mounted to operator cab **192** or another position on or above deck **122** to encourage flow of air into air inlet assembly **258.** Air cleaner **236** may be mounted to the entrance of or within the entrance of air inlet scoop **260** to mitigate the presence of contaminants within the air provided to fuel cell module(s) **224.** In some embodiments, air cleaner **236** may be positioned in an alternate position within air inlet assembly **258.** A second filter **270,** such as a carbon or chemical filter, may be positioned within a body **264** of air inlet assembly **258.** One or more outlets **266** may be positioned adjacent to each fuel cell module **224** to facilitate delivery of air to each fuel cell module **224.**

Balance-of-plant module(s) may be integrated with fuel cell module(s) **224** similar to fuel cell arrangement **201** described above. In other embodiments, balance-of-plant module(s) may be arranged within the architecture of mining truck **100** in a remote arrangement with corresponding fuel cell module(s) **224.** The balance-of-plant module(s) may be positioned, for example, on deck **122**, mounted on or under power module support frame **208**, within first side saddle **166** (FIG. **1**), within second side saddle **170**, or any other available position relative to mining truck **100.**

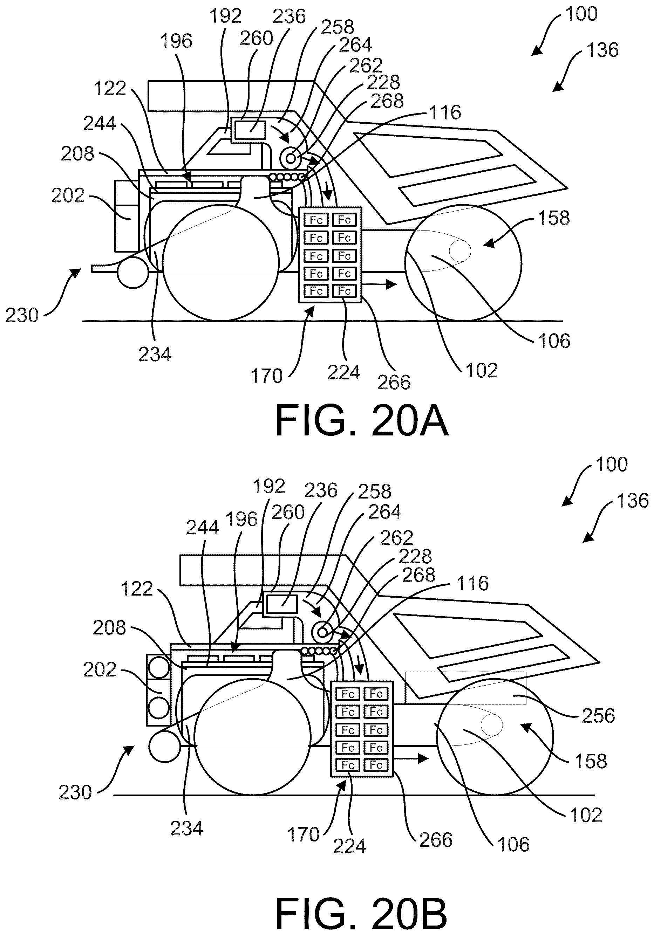

FIG. **20A-20C** illustrates another exemplary architecture of mining truck **100** from second side **136** of chassis **102** and mining truck **100.** As illustrated, primary hydrogen tank **234** may be mounted to power module support frame **208**, which may include an additional shelf structure **244** positioned above primary hydrogen tank **234** to support DC/DC system **196** thereon. Primary hydrogen tank **234** and/or DC/DC system **196** may be positioned within horse collar **116** of chassis **102** and may extend forward of and/or rearward of horse collar **116.** An exhaust **268** may be disposed between deck **122** and DC/DC system **196.**

Fuel cell module(s) **224** may be mounted within second side saddle **170** and mounted to, for example, second frame member **106** of chassis **102,** either directly or via hydraulic liquid tank **184** as described in relation to FIGS. **7A-7C**; in other words, fuel cell module(s) **224** may be positioned similarly and/or in place of second liquid tank **186** (FIGS. **7A-7C**) described above. Fuel cell(s) **224** may be packaged in a fuel cell pack module similar to a battery pack module as described above. In some other embodiments, fuel cell module(s) **224** may otherwise be mounted in first side saddle **166** (FIG. **1**). In yet other embodiments, the first side saddle may remain empty, or another component or additional liquid tank may be mounted therein.

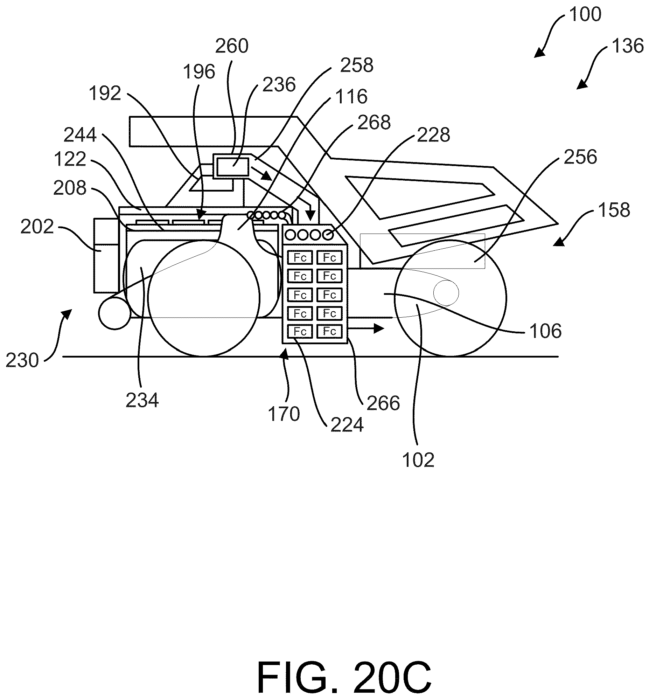

An air inlet assembly **258** may be structured and positioned to direct air from above deck **122** to fuel cell module(s) **224**. For example, an air inlet scoop **260** may be mounted to operator cab **192** or another position on or above deck **122** to encourage flow of air into air inlet assembly **258**. Air cleaner **236** may be mounted to the entrance of or within the entrance of air inlet scoop **260** to mitigate the presence of contaminants within the air provided to fuel cell module(s) **224**. In some embodiments, air cleaner **236** may be positioned in an alternate position within air inlet assembly **258**. As shown in FIGS. **20A-20B**, in some embodiments, one or more air pumps **262** may be positioned within a body **264** of air inlet assembly **258** to facilitate movement of air through air inlet assembly **258.** Balance-of-plant module(s) **228** may also be arranged with air pump(s) **262** within body **264** of air inlet assembly **258.** In other embodiments, as shown in FIG. **20C**, balance-of-plant module(s) **228** may be remotely arranged above fuel cell module(s) **224** in a centralized position relative to fuel cell module(s) **224** and air inlet assembly **258.** Referring again to all of FIGS. **20A-20C**, one or more outlets **266** may be positioned adjacent to each fuel cell module(s) **224** to facilitate delivery of air to each fuel cell module **224.**

Radiator **202** may be mounted to the forward-most position of deck **122,** i.e., at a first end portion of chassis **102** adjacent the first end of chassis **102,** and, for example, adjacent to forward-most edge of deck **122** so that radiator **202** extends downward over front end **230** of mining truck **100.** One or more electric fans may be positioned between radiator **202** and primary hydrogen tank **234** and/or DC/DC system **196** to assist with thermal management of components of mining truck **100** as described above. A heat exchanger, similar to heat exchanger **256** described above, may be mounted within rear region space **158** of chassis **102.**

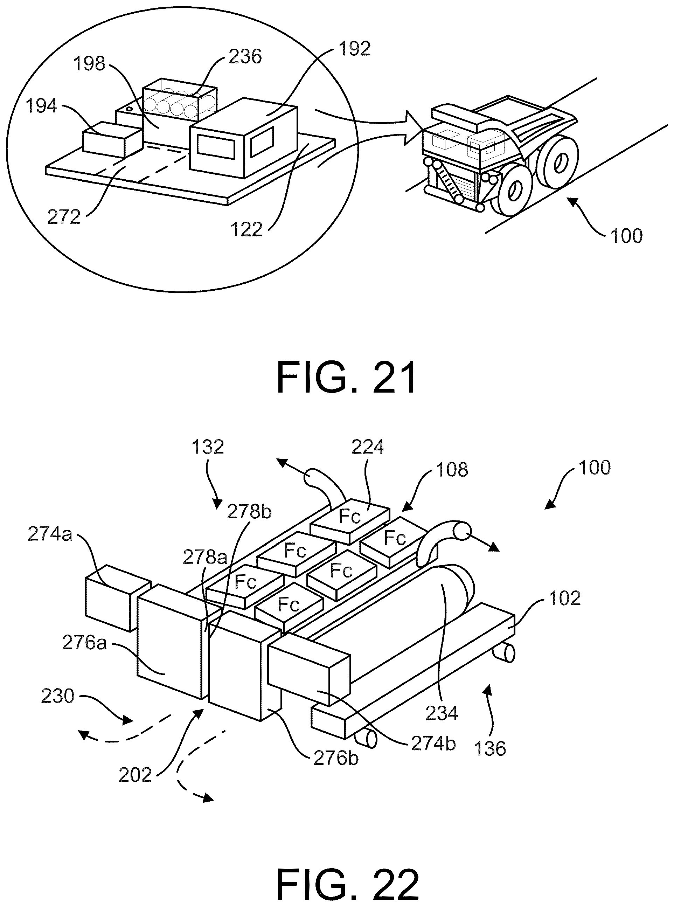

In any of the architectures described herein, access to components contained within the space defined by the first and second members of the chassis facilitates outfitting of the mining truck, as well as serviceability and/or replacement of components as needed. Referring to FIG. **21****,** such access may be provided via deck **122.** As shown and described above, deck **122** may support a number of components and/or subsystems for operation of mining truck **100.** For example, operator cab **192,** resistor grid **194**, inverter cabinet **198,** air filter(s) **236** and/or a number of other components and/or subsystems may be arranged on deck **122** as illustrated in FIG. **21** or otherwise positioned as described above. Deck **122** may further define an access panel **272** at a forward position of deck **122**, which may be configured to open to allow access to components and/or subsystems mounted to chassis **102** (FIG. **1**) as described above.

Now referring to FIG. **22****,** access to components and/or subsystems mounted to chassis **102** may be provided via radiator **202.** For example, in many embodiments described herein, radiator **202** is mounted adjacent to the forward-most position of deck **122** (FIG. **1**) and/or adjacent to forward-most edge of deck **122** (FIG. **1**) so that radiator **202** extends downward over front end **230** of mining truck **100.** In such embodiments, radiator **202** may be a hinged radiator. As shown in FIG. **22**, radiator **202** may include a first mounting section **274a** fixedly mounted to deck **122** (FIG. 1) or front end **230** of mining truck **100** at a position corresponding with first side **132** of chassis **102** and/or mining truck **100.** First mounting section **274a** may be pivotally coupled to a first hinged section **276a** so that first hinged section **276a** may pivot outwardly, or away from mining truck **100**, relative to first mounting section **274a.** Radiator **202** may further include a second mounting section **274b** fixedly mounted to deck **122** (FIG. **1**) or front end **230** of mining truck **100** at a position corresponding with second side **136** of chassis **102** and/or mining truck **100**. Second mounting section **274b** may be pivotally coupled to a second hinged section **276b** so that second hinged section **276b** may be pivot outwardly, or away from mining truck **100**, relative to second mounting section **274b.**

As such, first hinged section **276a** and second hinged section **276b** may open outwardly to provide access to the components and/or subsystems positioned within space **108** of chassis **102.** When closed, an edge **278a** of first hinged section **276a** and an edge **278b** of second hinged section **276b** may rest adjacent to each other to enclose the components and/or subsystems positioned within space **108** of chassis **102** behind said first hinged section **276a** and second hinged section **276b.** In some embodiments, radiator **202** may include a locking mechanism (not shown) to prevent undesired opening of first hinged section **276a** and second hinged section **276b.**

While FIG. **22** illustrates the positioning of primary hydrogen tank **234** and fuel cell modules **224** within space **108** of chassis **102**, it is understood that hinged radiator **202** may be applied to any architecture of mining truck **100** wherein radiator **202** is positioned at the first end portion and/or adjacent to the front end of chassis **102**, regardless of what components and/or subsystems are positioned within space **108** of chassis **102.**

While the system and methods herein have been described by reference to various specific embodiments it should be understood that numerous changes may be made within the spirit and scope of the concepts described, accordingly, it is intended that the invention is not limited to the described embodiments but will have full scope defined by the language of the following claims.

Various aspects are described in this disclosure, which include, but are not limited to, the following aspects:
(1) A mining haul truck, including: a vehicle chassis having a first end portion with a first end and a second end portion with a second end, the vehicle chassis including a first longitudinal member extending from the first end to the second end and a second longitudinal member extending from the first end to the second end, the first longitudinal member and the second longitudinal member defining a vehicle chassis space therebetween; a first wheel coupled to the first longitudinal member at a first forward position; a second wheel coupled to the first longitudinal member at a first rearward position, the first wheel and the second wheel defining a side saddle therebetween; a third wheel coupled to the second longitudinal member at a second forward position; a fourth wheel coupled to the second longitudinal member at a second rearward position, the third wheel and the fourth wheel defining a second side saddle therebetween; a power module support frame coupled to a forward position of the vehicle chassis; and a first fluid tank positioned within the vehicle chassis space defined by the first longitudinal member and the second longitudinal member and supported by the power module support frame.
(2) The mining haul truck of Aspect (1), further including a hydraulic fluid tank positioned in the second side saddle and mounted to the vehicle chassis.
(3) The mining haul truck of Aspect (2), wherein the first battery module is positioned between the power module support frame and the fluid tank.
(4) The mining haul truck of any one of Aspects (1)-(2), further including a fuel cell module positioned in one of the first side saddle and the second side saddle and coupled to the vehicle chassis; and a battery module positioned in the other of the first side saddle and the second side saddle and coupled to the vehicle chassis.
(5) The mining haul truck of any one of Aspects (1)-(2), further including a battery module positioned within the vehicle chassis space and supported by the power module support frame.
(6) The mining haul truck of any one of Aspects (1)-(2), further including a battery module positioned within the first end portion of the vehicle chassis on or adjacent to the first end of the vehicle chassis.
(7) The mining haul truck of any one of Aspects (1)-(2), further including a battery module positioned in one of the first side saddle and the second side saddle and mounted to the vehicle chassis.
(8) The mining haul truck of any one of Aspects (1)-(7), further including a fuel cell module positioned in the second side saddle and coupled to the vehicle chassis.
(9) The mining haul truck of any one of Aspects (1)-(7), further including a fuel cell module positioned within the vehicle chassis space adjacent to the first fluid tank.
(10) The mining haul truck of Aspect (9), wherein the fuel cell module is positioned between the power module support frame and the fluid tank.
(11) The mining haul truck of Aspect (9), wherein the fuel cell module is in a vertical arrangement with the first fluid tank so that the fuel cell module is arranged above the first fluid tank.
(12) The mining haul truck of any one of Aspects (1)-(7), further including a fuel cell module positioned in the first side saddle and mounted to the vehicle chassis.
(13) The mining haul truck of any one of Aspects (1)-(12), further including a deck supported by the first end portion of the vehicle chassis; and a balance-of-plant module supported by the deck.
(14) The mining haul truck of Aspect (13), further including an air cleaner supported by the balance-of-plant module.
(15) The mining haul truck of any one of Aspects (1)-(12), further including a balance-of-plant module positioned within the vehicle chassis space and supported by at least one of the power module support frame and the first fluid tank.
(16) The mining haul truck of Aspect (15), wherein the balance-of-plant module is positioned between the power module support frame and the first fluid tank.
(17) The mining haul truck of Aspect (15), wherein the balance-of-plant module is positioned in a rearward position relative to the fluid tank.
(18) The mining haul truck of any one of Aspects (1)-(17), further including an air cleaner positioned within the vehicle chassis space and supported by at least one of the power module support frame and the first fluid tank.
(19) The mining haul truck of Aspect (18), wherein the air cleaner is supported by a balance-of-plant module, the balance-of-plant module supported by one of the power module support frame and the first fluid tank.
(20) The mining haul truck of any one of Aspects (1)-(19), wherein the first fluid tank contains one of methanol and ammonia.
(21) The mining haul truck of any one of Aspects (1)-(19), wherein the first fluid tank is a hydrogen tank.
(22) The mining haul truck of any one of Aspects (1)-(21), further including a second fluid tank positioned within one of the first side saddle, the second side saddle, and adjacent to the first fluid tank in the vehicle chassis space.
(23) The mining haul truck of Aspect (22), wherein the second fluid tank is positioned adjacent to the first fluid tank within the vehicle chassis space and the first fluid tank and the second fluid tank are in a vertical arrangement.
(24) The mining haul truck of Aspect (22), further including a third fluid tank positioned within another one of the first side saddle, the second side saddle, and adjacent to the first fluid tank in the vehicle chassis space.
(25) The mining haul truck of Aspect (22), wherein the first fluid tank contains a first fluid and the second fluid tank contains a second fluid different than the first fluid.
(26) The mining haul truck of any one of Aspects (1)-(25), further including a radiator positioned at the first end portion of the vehicle chassis adjacent the first end of the vehicle chassis.
(27) The mining haul truck of Aspect (26), wherein the radiator is hingedly coupled to the mining haul truck.
(28) The mining haul truck of Aspect (26), further including a plurality of fans positioned between the radiator and the first fluid tank.
(29) The mining haul truck of any one of Aspects (1)-(28), further including a deck supported by a first end portion of the vehicle chassis; and an air cleaner supported by the deck adjacent to the first end of the chassis.
(30) The mining haul truck of any one of Aspects (1)-(29), further including a deck supported by a first end portion of the vehicle chassis; and a resistor grid supported by the deck.
(31) The mining haul truck of any one of Aspects (1)-(30), further including a deck supported by a first end portion of the vehicle chassis; and an inverter cabinet supported by the deck.
(32) The mining haul truck of any one of Aspects (1)-(31), wherein the first fluid tank is cylindrical.
(33) The mining haul truck of any one of Aspects (1)-(32), further including a DC/DC system positioned in the vehicle chassis space in a vertical arrangement with the first fluid tank so that the DC/DC system is above the first fluid tank.
(34) The mining haul truck of any one of Aspects (1)-(33), further including a rear chassis space defined between the second wheel and the fourth wheel; and a heat exchanger positioned in the rear chassis space.
(35) The mining haul truck of any one of Aspects (1)-(34), further including a deck supported by a first end portion of the vehicle chassis, the deck defining an access panel to selectively provide access to the vehicle chassis space.
(36) The mining haul truck of any one of Aspects (1)-(35), further including a heat exchanger positioned within the first end portion of the vehicle chassis adjacent to the front end of the vehicle chassis.
(37) A mining haul truck, including: a vehicle chassis having a first end portion with a first end and a second end portion with a second end, the vehicle chassis including a first longitudinal member extending from the first end to the second end and a second longitudinal member extending from the first end to the second end, the first longitudinal member and the second longitudinal member defining a vehicle chassis space therebetween; a power module support frame coupled to a forward position of the vehicle chassis; a first fluid tank positioned within the vehicle chassis space defined by the first longitudinal member and the second longitudinal member and mounted to a lower portion of the power module support frame; a fuel cell module positioned within the vehicle chassis space and supported by an upper portion of the power module support frame; and a balance-of-plant module positioned within the vehicle chassis space and supported by the upper portion of the power module support frame.
(38) The mining haul truck of Aspect (37), further including: a first wheel coupled to the first longitudinal member at a first forward position; a second wheel coupled to the first longitudinal member at a first rearward position, the first wheel and the second wheel defining a side saddle therebetween; and a battery module positioned within the first side saddle and mounted to the vehicle chassis.
(39) The mining haul truck of Aspect (38), further including: a third wheel coupled to the second longitudinal member at a second forward position; a fourth wheel coupled to the second longitudinal member at a second rearward position, the third wheel and the fourth wheel defining a second side saddle therebetween; a hydraulics tank positioned within the second side saddle and mounted to the vehicle chassis; and a second fluid tank positioned within the second side saddle and mounted to the vehicle chassis.
(40) The mining haul truck of Aspect (39), wherein at least one of the first fluid tank and the second fluid tank is a hydrogen tank.
(41) The mining haul truck of Aspect (39), wherein at least one of the first fluid tank and the second fluid tank contains one of methanol and ammonia.
(42) The mining haul truck of any one of Aspects (37)-(41), further including a deck supported by the first end portion of the vehicle chassis and an air cleaner supported by the deck.
(43) A mining haul truck, including: a vehicle chassis having a first end portion with a first end and a second end portion with a second end, the vehicle chassis including a first longitudinal member extending from the first end to the second end and a second longitudinal member extending from the first end to the second end, the first longitudinal member and the second longitudinal member defining a vehicle chassis space therebetween; a power module support frame positioned within the vehicle chassis space and coupled to the vehicle chassis; a first battery module supported by the power module support frame; a first fuel cell module positioned within the vehicle chassis space and supported by the power module support frame in a vertical arrangement with the first battery module so that the first fuel cell module is positioned above the first battery module; and a first balance-of-plant module positioned on the power module support frame and operably connected to the first fuel cell module.
(44) The mining haul truck of Aspect (43), further including a first wheel coupled to the first longitudinal member at a forward position and a second wheel coupled to the first longitudinal member at a rearward position, the first wheel and the second wheel defining a side saddle therebetween; and a fluid tank positioned within the first side saddle and coupled to the first longitudinal member.
(45) The mining haul truck of Aspect (44), wherein the fluid tank contains one of methanol and ammonia.
(46) The mining haul truck of Aspect (44), wherein the fluid tank is a hydrogen tank.
(47) The mining haul truck of any one of Aspects (43)-(46), further including a second battery module positioned within the vehicle chassis space and supported by the power module support frame.
(48) The mining haul truck of Aspect (47), further including: a second fuel cell module positioned within the vehicle chassis space and supported by the power module support frame in a vertical arrangement with the second battery module so that the second fuel cell module is positioned above the second battery module; and a second balance-of-plant module positioned within the vehicle chassis space, supported by the power module support frame, and connected to the second fuel cell module.
(49) The mining haul truck of Aspect (47), wherein the first battery module is coupled to a top surface of the power module support frame and the second battery module is coupled to a bottom surface of the power module support frame.
(50) The mining haul truck of any one of Aspects (43)-(49), wherein the first balance-of-plant module is integrated with the first fuel cell module.
(51) The mining haul truck of any one of Aspects (43)-(49), wherein the first balance-of plant module is spaced apart from the first fuel cell module.
(52) The mining haul truck of Aspect (51), wherein the first balance-of-plant module is positioned at a forward position relative to the first fuel cell stack.
(53) The mining haul truck of any one of Aspects (43)-(49), further including a deck supported by the first end portion of the vehicle chassis; and a radiator positioned adjacent a forwardmost position of the deck.
(54) The mining haul truck of Aspect (53), further including a plurality of fans positioned adjacent to the radiator.
(55) The mining haul truck of Aspect (53), further including an air cleaner positioned between the radiator and the first balance-of-plant module.
(56) A mining haul truck, including: a vehicle chassis having a first end portion with a first end and a second end portion with a second end, the vehicle chassis including a first longitudinal member extending from the first end to the second end and a second longitudinal member extending from the first end to the second end, the first longitudinal member and the second longitudinal member defining a vehicle chassis space therebetween; a power module support frame positioned within the vehicle chassis space and coupled to the vehicle chassis; a fuel cell module positioned within the vehicle chassis space and supported by the power module support frame; a balance-of-plant module positioned within the vehicle chassis space, connected to the fuel cell module, and supported by the power module support frame; and a radiator positioned within the vehicle chassis space and supported by the power module support frame, the radiator positioned in a vertical arrangement with the fuel cell module and the balance-of-plant module so that the radiator is positioned above the fuel cell module and the balance-of-plant module.
(57) The mining haul truck of Aspect (56), further including a first wheel coupled to the first longitudinal member at a forward position and a second wheel coupled to the first longitudinal member at a rearward position, the first wheel and the second wheel defining a side saddle therebetween; and a fluid tank positioned within the side saddle and coupled to the first longitudinal member.
(58) The mining haul truck of Aspect (57), wherein the fluid tank contains one of methanol and ammonia.
(59) The mining haul truck of Aspect (57), wherein the fluid tank is a hydrogen tank.
(60) The mining haul truck of any one of Aspects (56)-(59), further including a battery module positioned at a first end portion of the vehicle chassis adjacent the first end of the vehicle chassis.
(61) The mining haul truck of any one of Aspects (56)-(60), further including an air cleaner positioned at a first end portion of the vehicle chassis adjacent the first end of the vehicle chassis.
(62) The mining haul truck of any one of Aspects (56)-(61), further including a plurality of fans positioned adjacent to the radiator.
(63) A mining haul truck including: a vehicle chassis having a first end portion with a first end and a second end portion with a second end, the vehicle chassis having a first longitudinal member extending from the first end portion to the second end portion and a second longitudinal member extending from the first end portion to the second end portion, the first longitudinal member and the second longitudinal member defining a vehicle chassis space therebetween; a first wheel coupled to the first longitudinal member at a forward position; a second wheel coupled to the first longitudinal member at a rearward position, the first wheel and the second wheel defining a side saddle therebetween; a deck supported by the first end portion of the vehicle chassis; and a battery module positioned within the first end portion of the vehicle chassis adjacent the first end of the vehicle chassis.
(64) The mining haul truck of Aspect (63), further including a fluid tank positioned within the side saddle and coupled to the vehicle chassis.
(65) The mining haul truck of Aspect (64), wherein the fluid tank contains one of methanol and ammonia.
(66) The mining haul truck of Aspect (64), wherein the fluid tank is a hydrogen tank.
(67) The mining haul truck of any one of Aspects (63)-(66), further including an air cleaner positioned within the first end portion of the vehicle chassis adjacent the first end of the vehicle chassis.
(68) The mining haul truck of any one of Aspects (63)-(67), further including a fuel cell module positioned within the vehicle chassis space.
(69) The mining haul truck of Aspect (68), further including a balance-of-plant module connected to the fuel cell module and positioned within the vehicle chassis space.
(70) The mining haul truck of Aspect (69), further including a radiator positioned in a vertical arrangement with the fuel cell module and the balance-of-plant module so that the radiator is above the fuel cell module and the balance-of-plant module.
(71) The mining haul truck of Aspect (70), wherein the radiator is angled relative to the fuel cell module to define a triangular space between the fuel cell module and the radiator.
(72) The mining haul truck of Aspect (71), wherein an angle defined between the radiator and the fuel cell module is 30°-45°.
(73) The mining haul truck of Aspect (70), further including a plurality of fans positioned adjacent to the radiator.
(74) The mining haul truck of any one of Aspects (68)-(73), further including a second battery module positioned within the vehicle chassis space.
(75) The mining haul truck of Aspect (74), further including a hydrogen tank positioned in vertical arrangement with the second battery module so that the hydrogen tank is above the second battery module.
(76) The mining haul truck of any one of Aspects (63)-(75), further including a fluid tank positioned within the vehicle chassis space.
(77) The mining haul truck of Aspect (76), wherein the fluid tank contains one of methanol and ammonia.
(78) The mining haul truck of Aspect (76), wherein the fluid tank is a hydrogen tank.
(79) The mining haul truck of any one of Aspects (63)-(78), further including a balance-of-plant module supported by the deck.
(80) The mining haul truck of Aspect (79), further including an air cleaner supported by the balance-of-plant module.
(81) The mining haul truck of any one of Aspects (63)-(78), further including a radiator positioned at the first end portion of the vehicle chassis adjacent to the first end of the vehicle chassis.
(82) The mining haul truck of any one of Aspects (63)-(79), further including a fuel cell module positioned within the side saddle and coupled to the vehicle chassis.
(83) A mining haul truck, including: a vehicle chassis having a first end portion with a first end and a second end portion with a second end, the vehicle chassis including a first longitudinal member extending from the first end to the second end and a second longitudinal member extending from the first end to the second end, the first longitudinal member and the second longitudinal member defining a vehicle chassis space therebetween; a power module support frame positioned within the vehicle chassis space and coupled to the vehicle chassis; a first battery module supported by the power module support frame; and a second battery module positioned at the first end portion of the vehicle chassis adjacent the first end of the vehicle chassis.
(84) The mining haul truck of Aspect (83), further including a first wheel coupled to the first longitudinal member at a forward position and a second wheel coupled to the first longitudinal member at a rearward position, the first wheel and the second wheel defining a side saddle therebetween; and a fuel cell module positioned in the side saddle and coupled to the vehicle chassis.
(85) The mining haul truck of any one of Aspects (83)-(84), further including a fluid tank positioned within the vehicle chassis space in a vertical arrangement with the first battery module so that the fluid tank is above the first battery module.
(86) The mining haul truck of Aspect (85), wherein the fluid tank contains one of methanol and ammonia.
(87) The mining haul truck of Aspect (85), wherein the fluid tank is a hydrogen tank.
(88) The mining haul truck of any one of Aspects (83)-(87), further including a deck supported by the first end portion of the vehicle chassis and a balance-of-plant module supported by the deck.
(89) The mining haul truck of Aspect (88), further including an air cleaner supported by the balance-of-plant module.
(90) The mining haul truck of any one of Aspects (83)-(89), further including a radiator positioned at the first end portion of the vehicle chassis adjacent the first end of the vehicle chassis.
(91) A mining haul truck, including: a vehicle chassis having a first end portion with a first end and a second end portion with a second end, a first longitudinal member extending from the first end portion to the second end portion and a second longitudinal member extending from the first end portion to the second end portion, the first longitudinal member and the second longitudinal member defining a vehicle chassis space therebetween; a first wheel coupled to the first longitudinal member at a first forward position; a second wheel coupled to the first longitudinal member at a first rearward position, the first wheel and the second wheel defining a first side saddle therebetween; a third wheel coupled to the second longitudinal member at a second forward position; a fourth wheel coupled to the second longitudinal member at a second rearward position, the third wheel and the fourth wheel defining a second side saddle therebetween, and the second wheel and the fourth wheel defining a rear chassis space therebetween; and a fluid tank mounted at the first end portion of the vehicle chassis adjacent to the first end of the vehicle chassis.
(92) The mining haul truck of Aspect (91), further including a battery module mounted in the vehicle chassis space.
(93) The mining haul truck of any one of Aspects (91)-(92), further including a fuel cell module positioned in one of the first side saddle and the second side saddle and coupled to the vehicle chassis.
(94) The mining haul truck of Aspect (93), further including a hydraulic tank positioned in the other of the first side saddle and the second side saddle and coupled to the vehicle chassis.
(95) The mining haul truck of any one of Aspects (91)-(94), further including a heat exchanger positioned in the rear chassis space and coupled to the vehicle chassis.
(96) A method of assembling a mining haul truck having a vehicle chassis including a first longitudinal member extending from a first end of the vehicle chassis to a s second end of the vehicle chassis, the method including: mounting a first battery module on a power module support frame within a vehicle chassis space defined between the first longitudinal member and the second longitudinal member; positioning a first fuel cell module in a vertical arrangement with the first battery module so that the first fuel cell module is supported by the power module support frame above the first battery module.
(97) The method of Aspect (96), wherein the mining haul truck further includes a first wheel coupled to the first longitudinal member at a forward position and a second wheel coupled to the first longitudinal member at a rearward position, the method further including: mounting a fluid tank to the first longitudinal member within the first side saddle.
(98) The method of Aspect (97), wherein the fluid tank contains one of methanol and ammonia.
(99) The method of Aspect (97), wherein the fluid tank is a hydrogen tank.
(100) The method of any one of Aspects (96)-(99), further including mounting a second battery module to the power module support frame within the vehicle chassis space.
(101) The method of Aspect (100), further including mounting a second fuel cell module in a vertical arrangement with the second battery module so that the second fuel cell module is supported by the power module support frame above the second battery module.
(102) The method of Aspect (101), further including positioning a balance-of-plant module within the vehicle chassis space so that the balance-of-plant module is supported by the power module support frame.
(103) The method of Aspect (100), wherein the step of mounting the first battery module includes mounting the first battery module to a top surface of the power module support frame, and the step of mounting the second battery module includes mounting the second battery module to a bottom surface of the power module support frame.
(104) The method of any one of Aspects (96)-(103), wherein the mining haul truck further includes a balance-of-plant module integrated with the first fuel cell module.
(105) The method of any one of Aspects (96)-(103), further including positioning a balance-of-plant module in a position spaced-apart from the first fuel cell module.
(106) The method of Aspect (105), wherein positioning the balance-of-plant module includes positioning the balance-of-plant module in a forward position relative to the first fuel cell module.
(107) The method of any one of Aspects (96)-(106), wherein the mining haul truck further includes a deck supported by a first end portion of the vehicle chassis, the first end portion associated with the first end of the vehicle chassis, and the method further includes mounting a radiator to the mining truck adjacent to a forwardmost position of the deck.
(108) The method of Aspect (107), further including mounting a plurality of fans to the mining truck adjacent to the radiator.
(109) The method of any one of Aspects (107)-(108), further including mounting an air cleaner to the mining haul truck between the radiator and a balance-of-plant module.
(110) The method of any one of Aspects (96)-(109), further including positioning a balance-of-plant module associated with the first fuel cell module in a vertical arrangement with the power module support frame so that the balance-of-plant module is supported by the power module support frame.
(111) A method of assembling a mining haul truck having a vehicle chassis including a first longitudinal member extending from a first end of the vehicle chassis to a second end of the vehicle chassis and a second longitudinal member extending from the first end of the vehicle chassis to the second end of the vehicle chassis, the method including: mounting a fuel cell module to a power module support frame within a vehicle chassis space defined between the first longitudinal member and the second longitudinal member; mounting a balance-of-plant module to the power module support frame; and positioning a radiator in a vertical arrangement with the fuel cell module and the balance-of-plant module so that the radiator is supported by the power module support frame above the fuel cell module and the balance-of-plant module.
(112) The method of Aspect (111), wherein the mining haul truck further includes a first wheel coupled to the first longitudinal member at a forward position and a second wheel coupled to the first longitudinal member at a rearward position, the method further including: mounting a fluid tank to the vehicle chassis within a side saddle defined between the first wheel and the second wheel.
(113) The method of Aspect (112), wherein the fluid tank contains one of methanol and ammonia.
(114) The method of Aspect (112), wherein the fluid tank is a hydrogen tank.
(115) The method of any one of Aspects (111)-(114), further including mounting a battery module to the mining truck at a first end portion of the chassis adjacent to the first end of the vehicle chassis.
(116) The method of any one of Aspects (111)-(115), further including mounting an air cleaner to the mining truck at a first end portion of the chassis adjacent to the first end of the vehicle chassis.
(117) The method of any one of Aspects (111)-(116), further including positioning a plurality of fans so that the plurality of fans is supported by the power module support frame adjacent to the radiator.
(118) A method of assembling a mining haul truck having a vehicle chassis with a first end portion with a first end and a second end portion with a second end, the vehicle chassis including a first longitudinal member extending from the first end portion to the second end portion and a second longitudinal member extending from the first end portion to the second end portion, a vehicle chassis space defined between the first longitudinal member and the second longitudinal member, the mining haul truck further having a first wheel coupled to the first longitudinal member at a forward position and a second wheel coupled to the first longitudinal member at a rearward position, a side saddle defined between the first wheel and the second wheel and a deck supported by the first end portion of the vehicle chassis; the method including: mounting a battery module to the first end portion of the vehicle chassis adjacent to the first end of the vehicle chassis.
(119) The method of Aspect (118), further including mounting a fluid tank to the vehicle chassis within a side saddle defined between the first wheel and the second wheel.
(120) The method of Aspect (119), wherein the fluid tank contains one of methanol and ammonia.
(121) The method of Aspect (119), wherein the fluid tank is a hydrogen tank.
(122) The method of any one of Aspects (118)-(121), further including mounting an air cleaner to the first end portion.
(123) The method of any one of Aspects (118)-(122), further including mounting a fuel cell module to a power module support frame coupled to the vehicle chassis within the vehicle chassis space.
(124) The method of Aspect (123), further including mounting a balance-of-plant module to the power module support frame within the vehicle chassis space.
(125) The method of Aspect (124), further including positioning a radiator in a vertical arrangement with the fuel cell module and the balance-of-plant module so that the radiator is supported by the power module support frame above the fuel cell module and the balance-of-plant module.
(126) The method of Aspect (125), wherein positioning the radiator further includes angling the radiator relative to the fuel cell module to define a triangular space between the fuel cell module and the radiator.
(127) The method of Aspect (126), wherein an angle defined between the radiator and the fuel cell module is 30°-45°.
(128) The method of any one of Aspects (125)-(126), further including positioning a plurality of fans so that the plurality of fans is supported by the power module support frame adjacent to the radiator.
(129) The method of any one of Aspects (123)-(128), further including mounting a second battery module to the power module support frame within the vehicle chassis space.
(130) The method of Aspect (129), further including positioning a hydrogen tank in a vertical arrangement with the second battery module so that the hydrogen tank is supported by the power module support frame above the second battery module.
(131) The method of any one of Aspects (118)-(130), further including mounting a fluid tank to the power module support frame within the vehicle chassis space.
(132) The method of Aspect (131), wherein the fluid tank contains one of methanol and ammonia.
(133) The method of Aspect (131), wherein the fluid tank is a hydrogen tank.
(134) The method of any one of Aspects (118)-(133), further including mounting a balance-of-plant module to the deck.
(135) The method of Aspect (134), further including positioning an air cleaner so that the air cleaner is supported by the balance-of-plant module.
(136) The method of any one of Aspects (118)-(135), further including mounting a radiator to the front end portion of the vehicle chassis adjacent the first end of the vehicle chassis.
(137) The method of any one of Aspects (118)-(136), further including mounting a fuel cell module to the vehicle chassis within the side saddle.
(138) A method of assembling a mining haul truck having a vehicle chassis including a first longitudinal member extending from a first end of the vehicle chassis to a second end of the vehicle chassis and a second longitudinal member extending from the first end of the vehicle chassis to the second end of the vehicle chassis, the first end of the vehicle chassis supporting a deck, the method including: mounting a first battery module to a power module support frame coupled to the vehicle chassis within a vehicle chassis space defined between the first longitudinal member and the second longitudinal member; and mounting a second battery module at a first end portion of the vehicle chassis adjacent to the first end of the vehicle chassis.
(139) The method of Aspect (138), wherein the mining haul truck includes a first wheel coupled to the first longitudinal member at a forward position and a second wheel coupled to the first longitudinal member at a rearward position, the method further including: mounting a fuel cell module to the vehicle chassis within a side saddle defined between the first wheel and the second wheel.
(140) The method of any one of Aspects (138)-(139), further including positioning a fluid tank in vertical arrangement with the first battery module so that the fluid tank is supported by the power module support frame above the first battery module.
(141) The method of Aspect (140), wherein the fluid tank contains one of methanol and ammonia.
(142) The method of Aspect (140), wherein the fluid tank is a hydrogen tank.
(143) The method of any one of Aspects (138)-(142), further including mounting a balance-of-plant module on the deck.
(144) The method of Aspect (143), further including positioning an air cleaner so that the air cleaner is supported by the balance-of-plant module.
(145) The method of any one of Aspects (138)-(144), further including mounting a radiator at a first end portion of the vehicle chassis adjacent the first end of the vehicle chassis.
(146) A method of assembling a mining haul truck, the method including: mounting a power module support frame to a forward portion of a vehicle chassis of the mining haul truck, the vehicle chassis including a first longitudinal member extending from a first end of the vehicle chassis to a second end of the vehicle chassis and a second longitudinal member extending from the first end of the vehicle chassis to the second end of the vehicle chassis; and positioning a first fluid tank within a vehicle chassis space defined between the first longitudinal member and the second longitudinal member so that the first fluid tank is supported by the power module support frame; wherein the mining haul truck further includes: a deck supported by a first end portion of the vehicle chassis associated with the first end of the vehicle chassis; a first wheel coupled to the first longitudinal member at a first forward position; a second wheel coupled to the first longitudinal member at a first rearward position, the first wheel and the second wheel defining a first side saddle therebetween; a third wheel coupled to the second longitudinal member at a second forward position; and a fourth wheel coupled to the second longitudinal member at a second rearward position, the third wheel and the fourth wheel defining a second side saddle therebetween.
(147) The method of Aspect (146), further including positioning a first battery module within the vehicle chassis space so that the first battery module is supported by the power module support frame.
(148) The method of Aspect (147), wherein positioning the first battery module includes positioning the first battery module between the power module support frame and the fluid tank.
(149) The method of any one of Aspects (147)-(148), further including mounting a second battery module adjacent to the first end of the vehicle chassis.
(150) The method of any one of Aspects (146)-(149), wherein the fluid tank contains one of methanol and ammonia.
(151) The method of any one of Aspects (146)-(149), wherein the fluid tank is a hydrogen tank.
(152) The method of any one of Aspects (146)-(151), further including positioning a balance-of-plant module within the vehicle chassis space so that the balance-of-plant module is supported by the power module support frame.
(153) The method of Aspect (152), wherein positioning the balance-of-plant module includes positioning the balance-of-plant module between the power module support frame and the fluid tank.
(154) The method of any one of Aspects (152)-(153), wherein positioning the balance-of-plant module includes positioning the balance-of-plant module so that the balance-of-plant module is further supported by the fluid tank.
(155) The method of any one of Aspects (152)-(154), wherein positioning the balance-of-plant module includes positioning the balance-of-plant module so that the balance-of-plant module is rearward relative to the fluid tank.
(156) The method of Aspect (155), further including positioning an air cleaner so that the air cleaner is supported by the balance-of-plant module.
(157) The method of any one of Aspects (146)-(156), further including mounting a fuel cell module to the vehicle chassis within at least one of the first side saddle and the second side saddle.
(158) The method of any one of Aspects (146)-(157), further including mounting a battery module to the vehicle chassis within at least one of the first side saddle and the second side saddle.
(159) The method of any one of Aspects (146)-(158), further including mounting a fuel cell module to the vehicle chassis within one of the first side saddle and the second side saddle; and mounting a battery module to the vehicle chassis in the other of the first side saddle and the second side saddle.
(160) The method of any one of Aspects (146)-(159), further including mounting a second fluid tank within one of the first side saddle, the second side saddle, and the vehicle chassis space in a position adjacent to the first fluid tank.
(161) The method of Aspect (160), further including mounting the second fluid tank within the vehicle chassis space in a position adjacent to the first fluid tank so that the first fluid tank and the second fluid tank are in a vertical arrangement.
(162) The method of any one of Aspects (160)-(161), further including mounting a third fluid tank within another of the first side saddle, the second side saddle, and the vehicle chassis space adjacent to the first fluid tank.
(163) The method of any one of Aspects (160)-(162), wherein the first fluid tank contains a first fluid and the second fluid tank contains a second fluid different than the first fluid.
(164) The method of any one of Aspects (146)-(163), further including mounting a radiator adjacent the first end of the vehicle chassis.
(165) The method of Aspect (164), wherein mounting the radiator includes hingedly mounting the radiator.
(166) The method of any one of Aspects (164)-(165), further including positioning a plurality of fans between the radiator and the first fluid tank.
(167) The method of any one of Aspects (146)-(166), further including mounting a balance-of-plant module on the deck.
(168) The method of Aspect (167), further including positioning an air cleaner so that the air cleaner is supported by the balance-of-plant module.
(169) The method of any one of Aspects (146)-(168), further including mounting a fuel cell module within the vehicle chassis space adjacent to the first fluid tank so that the fuel cell stack is supported by the power module support frame.
(170) The method of Aspect (169), wherein mounting the fuel cell module includes positioning the fuel cell module so that the fuel cell module is also supported by the fluid tank.
(171) The method of any one of Aspects (169)-(170), wherein mounting the fuel cell module includes positioning the fuel cell module so that the fuel cell module is also supported by the fluid tank.
(172) The method of any one of Aspects (169)-(171), wherein mounting the fuel cell module includes positioning the fuel cell module between the power module support frame and the fluid tank.
(173) The method of any one of Aspects (146)-(172), further including mounting an air cleaner on the deck adjacent to the first end of the chassis.
(174) The method of any one of Aspects (146)-(173), further including mounting a resistor grid on the deck.
(175) The method of any one of Aspects (146)-(174), further including mounting an inverter cabinet on the deck.
(176) The method of any one of Aspects (146)-(175), wherein the fluid tank is cylindrical.
(177) The method of any one of Aspects (146)-(176), further including mounting a DC/DC system within the vehicle chassis space in a vertical arrangement with the fluid tank so that the DC/DC system is positioned above the fluid tank and supported by the power module support frame.
(178) The method of any one of Aspects (146)-(177), further including mounting a heat exchanger within a rear chassis space defined between the second wheel and the fourth wheel.
(179) A method of assembling a mining haul truck, including: a vehicle chassis having a first end portion including the front end of the mining haul truck and a second end portion including a rear of the mining haul truck, a first longitudinal member extending from the first end portion to the second end portion and a second longitudinal member extending from the first end portion to the second end portion, the first longitudinal member and the second longitudinal member defining a vehicle chassis space therebetween; a first wheel coupled to the first longitudinal member at a first forward position; a second wheel coupled to the first longitudinal member at a first rearward position, the first wheel and the second wheel defining a first side saddle therebetween; a third wheel coupled to the second longitudinal member at a second forward position; and a fourth wheel coupled to the second longitudinal member at a second rearward position, the third wheel and the fourth wheel defining a second side saddle therebetween, and the second wheel and the fourth wheel defining a rear chassis space therebetween; wherein the method includes: mounting a fluid tank at the first end portion of the vehicle chassis adjacent to the first end of the vehicle chassis.
(180) The method of Aspect (179), further including mounting a battery module to a power module support frame in the vehicle chassis space.
(181) The method of any one of Aspects (179)-(180), further including mounting a fuel cell module to the vehicle chassis in one of the first side saddle and the second side saddle.
(182) The method of Aspect (181), further including mounting a hydraulic tank to the vehicle chassis in the other of the first side saddle and the second side saddle.
(183) The method of any one of Aspects (179)-(182), further including mounting a heat exchanger to the vehicle chassis in the rear chassis space.
(184) A mining haul truck, including: a vehicle chassis having a first end portion with a first end and a second end portion with a second end, the vehicle chassis including a first longitudinal member extending from the first end to the second end and a second longitudinal member extending from the first end to the second end, the first longitudinal member and the second longitudinal member defining a vehicle chassis space therebetween; a deck supported by the first end portion of the vehicle chassis; and an air inlet assembly mounted to the deck, the air inlet assembly including an air inlet scoop positioned above the deck and an air filter positioned in the air inlet scoop.
(185) The mining haul truck of Aspect (184), further including a fuel cell module mounted to a power module support frame within the vehicle chassis space and coupled to the vehicle chassis.
(186) The mining haul truck of Aspect (185), further including a battery module mounted to the power module support frame in a vertical arrangement with the fuel cell stack so that the fuel cell stack is positioned above the battery module.
(187) The mining haul truck of any one of Aspects (185)-(186), further including a fluid tank mounted to the power module support frame in a vertical arrangement with the fuel cell module so that the fuel cell module is positioned above the battery module.
(188) The mining haul truck of any one of Aspects (185)-(187), wherein the air inlet assembly includes an outlet positioned adjacent to the fuel cell module.
(189) The mining haul truck of any one of Aspects (184)-(188), further including an air pump positioned within a body of the air inlet assembly.
(190) The mining haul truck of any one of Aspects (184)-(189), further including a balance-of-plant module positioned within a body of the air inlet assembly.
(191) The mining haul truck of any one of Aspects (184)-(190), further including a second filter positioned within a body of the air inlet assembly.
(192) The mining haul truck of any one of Aspects (184)-(191), further including an exhaust positioned between a portion of the air inlet assembly and a bottom surface of the deck.
(193) The mining haul truck of any one of Aspects (184)-(192), further including a first wheel mounted to a forward position of the first longitudinal member of the vehicle chassis; a second wheel mounted to a rearward position of the first longitudinal member of the vehicle chassis; a side saddle defined between the first wheel and the second wheel; and a battery module mounted to the vehicle chassis within the side saddle.
(194) The mining haul truck of any one of Aspects (184)-(193), further including: a first wheel mounted to a forward position of the first longitudinal member of the vehicle chassis; a second wheel mounted to a rearward position of the first longitudinal member of the vehicle chassis; a side saddle defined between the first wheel and the second wheel; and a fluid tank mounted to the vehicle chassis within the side saddle.
(195) The mining haul truck of Aspect (194), wherein the fluid tank contains one of methanol and ammonia.
(196) The mining haul truck of Aspect (194), wherein the fluid tank is a hydrogen tank.
(197) The mining haul truck of any one of Aspects (184)-(196), further including a radiator mounted at a first end portion of the vehicle chassis adjacent the first end of the vehicle chassis.
(198) The mining haul truck of Aspect (197), wherein the radiator is hingedly mounted.
(199) The mining haul truck of any one of Aspects (184)-(198), further including a DC/DC system mounted to a power module support frame within the vehicle chassis space and coupled to the vehicle chassis.
(200) The mining haul truck of Aspect (199), further including a first wheel mounted to a forward position of the first longitudinal member of the vehicle chassis; a second wheel mounted to a rearward position of the first longitudinal member of the vehicle chassis; a side saddle defined between the first wheel and the second wheel; and a fuel cell module mounted to the vehicle chassis within the side saddle.
(201) The mining haul truck of any one of Aspects (184)-(200), wherein the deck defines an access panel.
(202) A method of assembling a mining haul truck, the mining haul truck including a vehicle chassis having a first end portion with a first end and a second end portion with a second end, the vehicle chassis including a first longitudinal member extending from the first end to the second end and a second longitudinal member extending from the first end to the second end, the first longitudinal member and the second longitudinal member defining a vehicle chassis space therebetween, the mining haul truck further including a deck supported by the first end portion of the vehicle chassis, the method including: mounting an air inlet assembly to the deck, the air inlet assembly including an air inlet scoop positioned above the deck; and positioning an air filter in the air inlet scoop.
(203) The method of Aspect (202), further including mounting a fuel cell module to a power module support frame coupled to the vehicle chassis within the vehicle chassis space.
(204) The method of Aspect (203), further including mounting a battery module to the power module support frame in a vertical arrangement with the fuel cell module so that the fuel cell module is positioned above the battery module.
(205) The method of any one of Aspects (203)-(204), further including mounting a fluid tank to the power module support frame in a vertical arrangement with the fuel cell module so that the fuel cell module is positioned above the battery module.
(206) The method of any one of Aspects (203)-(205), further including positioning an outlet of the air inlet assembly adjacent to the fuel cell module.
(207) The method of any one of Aspects (202)-(206), further including positioning an air pump within a body of the air inlet assembly.
(208) The method of any one of Aspects (202)-(207), further including positioning a balance-of-plant module within a body of the air inlet assembly.
(209) The method of any one of Aspects (202)-(208), further including positioning a second filter within a body of the air inlet assembly.
(210) The method of any one of Aspects (202)-(209), further including positioning an exhaust between a portion of the air inlet assembly and a bottom surface of the deck.
(211) The method of any one of Aspects (202)-(210), wherein the mining haul truck further includes a first wheel mounted to a forward position of the first longitudinal member of the vehicle chassis, a second wheel mounted to a rearward position of the first longitudinal member of the vehicle chassis, and a side saddle defined between the first wheel and the second wheel, the method further including: mounting a battery module to the vehicle chassis within the side saddle.
(212) The method of any one of Aspects (202)-(211), wherein the mining truck further includes a first wheel mounted to a forward position of the first longitudinal member of the vehicle chassis, a second wheel mounted to a rearward position of the first longitudinal member of the vehicle chassis, and a side saddle defined between the first wheel and the second wheel, the method further including: mounting a fluid tank to the vehicle chassis within the side saddle.
(213) The method of Aspect (212), wherein the fluid tank contains one of methanol and ammonia.
(214) The method of Aspect (212), wherein the fluid tank is a hydrogen tank.
(215) The method of any one of Aspects (202)-(214), further including mounting a radiator at the first end portion of the vehicle chassis adjacent the first end of the vehicle chassis.
(216) The method of Aspect (215), wherein mounting the radiator includes hingedly mounting the radiator.
(217) The method of any one of Aspects (202)-(216), further including mounting a DC/DC system to a power module support frame coupled to the vehicle chassis within the vehicle chassis space.
(218) The method of Aspect (217), wherein the mining haul truck further includes a first wheel mounted to a forward position of the first longitudinal member of the vehicle chassis, a second wheel mounted to a rearward position of the first longitudinal member of the vehicle chassis, and a side saddle defined between the first wheel and the second wheel, the method further including: mounting a fuel cell module to the vehicle chassis within the side saddle.
(219) The method of any one of Aspects (202)-(218), wherein the deck defines an access panel.
(220) A fuel cell module arrangement, including: a first battery module coupled to a top surface of a power module support frame; a first fuel cell module positioned above the first battery module and having a first connection end facing a first direction; and a first balance-of-plant module coupled to a top surface of the power module support frame adjacent the first battery module, the first balance-of-plant module operably connected to the first connection end of the first fuel cell module.
(221) The fuel cell module arrangement of Aspect (220), further including a second battery module coupled to a bottom surface of the power module support frame.
(222) The fuel cell module arrangement of any one of Aspects (220)-(221), further including a second fuel cell module positioned above the first battery module and having a second connection end facing a second direction.
(223) The fuel cell module arrangement of Aspect (222), wherein the first direction and the second direction are opposite of each other.
(224) The fuel cell arrangement of any one of Aspects (222)-(223), further including a second balance-of-plant module coupled to a top surface of the power module support frame, the second balance-of-plant module operably connected to the second connection end of the second fuel cell module.
(225) The fuel cell module arrangement of Aspect (224), wherein the first balance-of-plant module is coupled to the top surface of the power module support frame corresponding with a first longitudinal half of the power module support frame and the second balance-of-plant module is coupled to the top surface of the power module support frame corresponding with a second longitudinal half of the power module support frame.
(226) The fuel cell module arrangement of any one of Aspects (222)-(225), wherein the first fuel cell module is a plurality of fuel cell modules.
(227) The fuel cell module arrangement of Aspect (226), wherein the plurality of fuel cell modules includes a stacked pair of fuel cell modules.
(228) The fuel cell module arrangement of Aspect (227), wherein the plurality of fuel cell modules includes two stacked pairs of fuel cell modules.
(229) The fuel cell module arrangement of any one of Aspects (226)-(228), wherein the first balance-of-plant module is a plurality of balance-of-plant modules.
(230) The fuel cell module arrangement of Aspect (229), wherein the plurality of balance-of-plant modules includes a stacked pair of balance-of-plant modules.
(231) The fuel cell module arrangement of Aspect (230), wherein the plurality of balance-of-plant modules includes two stacked pairs of fuel cell modules.
(232) The fuel cell module arrangement of any one of Aspects (229)-(231), wherein the first connection end of each fuel cell module of the plurality of fuel cell modules faces a first direction and each balance-of-plant module of the plurality of balance-of-plant modules is arranged on a first longitudinal half of the power module support frame corresponding with the first direction; wherein the fuel cell module arrangement further includes a second plurality of fuel cell modules positioned above the first battery pack module, each fuel cell of the second plurality of fuel cell modules having a second connection end facing a second direction; and a second plurality of balance-of-plant modules coupled on a second longitudinal half of the power module support frame corresponding with the second direction.

## Claims

1. A mining haul truck, comprising:
a vehicle chassis having a first end portion with a first end and a second end portion with a second end, the vehicle chassis comprising a first longitudinal member extending from the first end to the second end and a second longitudinal member extending from the first end to the second end, the first longitudinal member and the second longitudinal member defining a vehicle chassis space therebetween;
a first wheel coupled to the first longitudinal member at a first forward position;
a second wheel coupled to the first longitudinal member at a first rearward position, the first wheel and the second wheel defining a side saddle therebetween;
a third wheel coupled to the second longitudinal member at a second forward position;
a fourth wheel coupled to the second longitudinal member at a second rearward position, the third wheel and the fourth wheel defining a second side saddle therebetween;
a power module support frame coupled to a forward position of the vehicle chassis; and
a first fluid tank positioned within the vehicle chassis space defined by the first longitudinal member and the second longitudinal member and supported by the power module support frame.

2. The mining haul truck of claim 1, further comprising a hydraulic fluid tank positioned in the second side saddle and mounted to the vehicle chassis.

3. The mining haul truck of claim 1 or claim 2, further comprising a battery module, wherein the battery module is:
- positioned within the vehicle chassis space and supported by the power module support frame; or
- positioned within the first end portion of the vehicle chassis on or adjacent to the first end of the vehicle chassis; or
- positioned in one of the first side saddle and the second side saddle and mounted to the vehicle chassis.

4. The mining haul truck of any one of the preceding claims, further comprising a fuel cell module, wherein the fuel cell module is:
- positioned within the vehicle chassis space adjacent to the first fluid tank; or
- positioned in the first side saddle and mounted to the vehicle chassis.

5. The mining haul truck of any one of the preceding claims, further comprising at least one of:
- a balance-of-plant module positioned within the vehicle chassis space and supported by at least one of the power module support frame and the first fluid tank; and
- an air cleaner positioned within the vehicle chassis space and supported by at least one of the power module support frame and the first fluid tank.

6. The mining haul truck of claim 1,
wherein the first fluid tank is mounted to a lower portion of the power module support frame;
and wherein the mining haul truck further comprises:
a fuel cell module positioned within the vehicle chassis space and supported by an upper portion of the power module support frame; and
a balance-of-plant module positioned within the vehicle chassis space and supported by the upper portion of the power module support frame.

7. The mining haul truck of claim 6, further comprising:
a battery module positioned within the first side saddle and mounted to the vehicle chassis.

8. The mining haul truck of claim 7, further comprising:
a hydraulics tank positioned within the second side saddle and mounted to the vehicle chassis; and
a second fluid tank positioned within the second side saddle and mounted to the vehicle chassis.

9. The mining haul truck of claim 8, wherein at least one of the first fluid tank and the second fluid tank is a hydrogen tank, or wherein at least one of the first fluid tank and the second fluid tank contains one of methanol and ammonia.

10. The mining haul truck of any one of claims 6 to 9, further comprising a deck supported by the first end portion of the vehicle chassis and an air cleaner supported by the deck.

11. The mining haul truck of claim 1,
wherein the power module support frame is positioned within the vehicle chassis space;
the mining haul truck further comprising:
a first battery module supported by the power module support frame;
a first fuel cell module positioned within the vehicle chassis space and supported by the power module support frame in a vertical arrangement with the first battery module so that the first fuel cell module is positioned above the first battery module; and
a first balance-of-plant module positioned on the power module support frame and operably connected to the first fuel cell module.

12. The mining haul truck of claim 11,
wherein the first fluid tank is positioned within the first side saddle and coupled to the first longitudinal member.

13. The mining haul truck of claim 11 or claim 12, further comprising a second battery module positioned within the vehicle chassis space and supported by the power module support frame.

14. The mining haul truck of claim 13, further comprising:
a second fuel cell module positioned within the vehicle chassis space and supported by the power module support frame in a vertical arrangement with the second battery module so that the second fuel cell module is positioned above the second battery module; and
a second balance-of-plant module positioned within the vehicle chassis space, supported by the power module support frame, and connected to the second fuel cell module.

15. The mining haul truck of claim 13 or claim 14, wherein the first battery module is coupled to a top surface of the power module support frame and the second battery module is coupled to a bottom surface of the power module support frame.
